# EUROPÄISCHE PATENTSCHRIFT

(11) **EP 2 925 509 B1**
(45) Veröffentlichungstag und Bekanntmachung des Hinweises auf die Patenterteilung: **05.10.2016**
(21) Anmeldenummer: 13811812.0
(22) Anmeldetag: 01.12.2013
(51) Int. Cl.: B29C 70/38, B29C 70/54

(54) **VERFAHREN UND AUFLEGE-MASCHINE ZUM AUFLEGEN UND ANHEFTEN VON BANDABSCHNITTEN AUF EIN HERZUSTELLENDES TEIL**
METHOD AND PLACEMENT MACHINE FOR PLACING AND ATTACHING STRIP SECTIONS TO A PART TO BE PRODUCED
PROCÉDÉ ET MACHINE DE POSE DESTINÉS À LA POSE ET À LA FIXATION DE SECTIONS DE BANDE SUR UNE PIÈCE À FABRIQUER

(30) Priorität: 30.11.2012 US 201261731596 P
(43) Veröffentlichungstag der Anmeldung: 07.10.2015
(73) Patentinhaber: DIEFFENBACHER GMBH Maschinen- und Anlagenbau, 75031 Eppingen (DE)
(72) Erfinder: BORGMANN, Robert, E., 75031 Eppingen (DE); EVANS, Don, 75031 Eppingen (DE); MCCLARD, Christina, 75031 Eppingen (DE)
(86) Internationale Anmeldenummer: PCT/EP2013/075190
(87) Internationale Veröffentlichungsnummer: WO 2014/083196

(56) Entgegenhaltungen:
- EP-A1- 0 846 551
- WO-A1-2006/118692
- WO-A2-2009/042225
- US-A- 4 491 493

## Beschreibung

### STAND DER TECHNIK

### Gebiet der Erfindung

Die vorliegenden Ausführungsbeispiele betreffen allgemein moderne Verbundwerkstoffe und insbesondere Systeme und Verfahren zur Steigerung der Auflege-Rate eines automatisierten Auflegesystems. Die Ausführungsbeispiele betreffen die Ausrüstung und die Systeme, die zur Herstellung moderner Verbundwerkstoffkomponenten mit Hilfe eines automatisierten Auflegeverfahrens unter Anwendung von Materialien angewendet werden, die in der Regel in Form aufgespulter Bänder bereitgestellt werden.

### Hintergrund der Erfindung

Moderne, automatisierte Auflegesysteme benutzen in der Regel mehrere getrennte Teilsysteme zur Durchführung der verschiedenen Funktionen des Abwickelns, Zuführens, Schneidens, Platzierens und Anheftens eines Bandabschnitts auf einer bestimmten Position. Da viele dieser Funktionen normalerweise seriell ablaufen, ist die Nettoproduktivität der gesamten Auflege-Maschine von der Höchstgeschwindigkeit abhängig, mit der die einzelnen Teilsysteme zu arbeiten imstande sind.

Die Geschwindigkeit des Teilsystems, das dazu dient, ein Bandmaterial auf Länge zu ziehen und dieses in Relation zur Bearbeitungsfläche zu positionieren, wirkt sich erheblich auf die Gesamtproduktivität der Auflege-Maschine aus. In der Regel sind solche Systeme mit einem Greifmechanismus ausgestattet, der an einem Linearantrieb angebracht ist. Das Greifmittel ergreift die Vorderkante des Bandmaterials und zieht dieses entlang einer Reihe von Führungsbahnen in die gewünschte Länge, wie vom Auflege-Programm für den bestimmten zu produzierenden Teil festgelegt. Leider unterliegen die maximal erzielbare Geschwindigkeit und die Beschleunigung des Linearantriebs praktischen Beschränkungen, die auf einer Kombination mehrerer Faktoren beruhen, etwa Reibung, Verpackungsbeschränkungen und der Masse des Greifmittels und zugehöriger Teile. Überdies bestimmt die maximal erzielbare Kraft, die der Greifmechanismus auf das Bandmaterial ausüben kann, die maximale Beschleunigungsrate, mit der dieses das Bandmaterial ohne Schlupf zuverlässig ziehen kann.

WO 2009/042225 offenbart ein Verfahren gemäß dem Oberbegriff des Anspruchs 1 und eine Vorrichtung gemäß dem Oberbegriff des Anspruchs 9.

Es besteht daher die Notwendigkeit erhöhter Auflege-Raten und einer erhöhten Produktivität eines gesamten automatisierten Auflegesystems.

### ZUSAMMENFASSUNG

Die vorstehende und andere Aufgaben der Erfindung werden gelöst durch eine Auflege-Maschine und ein Verfahren zum Auflegen von Bandabschnitten wie mit den unabhängigen Ansprüchen 1 und 9 definiert. Weitere bevorzugte Ausführungsformen sind in den abhängigen Ansprüchen dargelegt.

In einem ersten Aspekt wird ein Verfahren bereitgestellt zum Auflegen und Anheften von Bandabschnitten auf ein herzustellendes Teil, aufweisend: Zuführen von Bandmaterial mit einer ersten Material-Zuführungseinheit über eine bestimmte Distanz über eine erste Schneideinrichtung hinaus; Greifen der Vorderkante des Bandmaterials von der ersten Material-Zuführungseinheit mit einem ersten Greifmittel; Bewegen des ersten Greifmittels über eine Distanz, die der gewünschten Länge eines Bandabschnitts entspricht, in einer Richtung weg von der ersten Schneideinrichtung; Abtrennen des Endes des Bandabschnitts von der ersten Material-Zuführungseinheit mit der ersten Schneideinrichtung; Bewegen des ersten Greifmittels weiter in Richtung weg von der ersten Schneideinrichtung, bis der Bandabschnitt an einer gewünschten Stelle in Führungsbahnen positioniert ist; erstes Bewegen eines Bewegungstischs in eine Position zur Aufnahme des Bandabschnitts; Platzieren des von der ersten Material-Zuführungseinheit bereitgestellten Bandabschnitts auf einer Bearbeitungsfläche des Bewegungstischs und Anheften durch eine erste Bandhefteinheit; und Bewegen des ersten Greifmittels zurück in eine Position angrenzend an die erste Schneideinrichtung; dadurch gekennzeichnet, dass das Verfahren weiter aufweist: Zuführen von Bandmaterial mit einer zweiten Material-Zuführungseinheit über eine bestimmte Distanz über eine zweite Schneideinrichtung hinaus; Greifen der Vorderkante des Bandmaterials von der zweiten Material-Zuführungseinheit mit einem zweiten Greifmittel; Bewegen des zweiten Greifmittels über eine Distanz, die der gewünschten Länge eines Bandabschnitts entspricht, in einer Richtung weg von der zweiten Schneideinrichtung; Abtrennen des Endes des Bandabschnitts von der zweiten Material-Zuführungseinheit mit einer zweiten Schneideinrichtung; Bewegen des zweiten Greifmittels weiter in Richtung weg von der zweiten Schneideinrichtung, bis der Bandabschnitt an einer gewünschten Stelle in Führungsbahnen positioniert ist; zweites Bewegen des Bewegungstischs in eine Position zur Aufnahme des Bandabschnitts; Platzieren des von der zweiten Material-Zuführungseinheit bereitgestellten Bandabschnitts auf der Bearbeitungsfläche des Bewegungstischs und Anheften durch die erste oder durch eine zweite Bandhefteinheit; und Bewegen des zweiten Greifmittels zurück in eine Position angrenzend an die zweite Schneideinrichtung.

Bevorzugt kann das erste Bewegen des Bewegungstischs in eine Position zur Aufnahme des Bandabschnitts gleichzeitig mit der Positionierung des von der ersten Material-Zuführungseinheit zugeführten Bandabschnitts in den Führungsbahnen erfolgen, und das zweite Bewegen des Bewegungstischs in eine Position zur Aufnahme des Bandabschnittes gleichzeitig mit der Positionierung des von der zweiten Material-Zuführungseinheit zugeführten Bandabschnitts in den Führungsbahnen erfolgen.

Weiter vorzugsweise kann das erste Greifmittel gebildet sein durch einen ersten Greifmechanismus, der an einem ersten Linearantrieb montiert ist, und das zweite Greifmittel gebildet sein durch einen zweiten Greifmechanismus, der an einem zweiten Linearantrieb montiert ist; und dass weiter das Zuführen von Bandmaterial mit der zweiten Material-Zuführungseinheit über eine bestimmte Distanz über die zweite Schneideinrichtung hinaus gleichzeitig mit der Positionierung des von der ersten Material-Zuführungseinheit zugeführten Bandabschnitts in den Führungsbahnen erfolgt, und das Zuführen von Bandmaterial mit der ersten Material-Zuführungseinheit über eine bestimmte Distanz über die erste Schneideinrichtung hinaus gleichzeitig mit der Positionierung des von der zweiten Material-Zuführungseinheit zugeführten Bandabschnitts in den Führungsbahnen erfolgt.

Alternativ und besonders bevorzugt können das erste und das zweite Greifmittel auch gebildet sein durch einen ersten Greifmechanismus beziehungsweise einen zweiten Greifmechanismus einer Bandgreifanordnung, die an einem Linearantrieb montiert ist, wobei der Linearantrieb eine Bewegungsreichweite aufweist, die es dem ersten Greifmechanismus erlaubt, auf Bandmaterial zuzugreifen, das von der ersten Material-Zuführungseinheit bereitgestellt wird, und die es dem zweiten Greifmechanismus erlaubt, auf Bandmaterial zuzugreifen, das von der zweiten Material-Zuführungseinheit bereitgestellt wird; und dass weiter nach dem Platzieren des von der ersten Material-Zuführungseinheit bereitgestellten Bandabschnitts auf einer Bearbeitungsfläche des Bewegungstischs und Anheften durch die erste Bandhefteinheit das Zuführen von Bandmaterial mit der zweiten Material-Zuführungseinheit auf eine bestimmte Distanz über die zweite Schneideinrichtung hinaus erfolgt und der Linearantrieb die Bandgreifanordnung über die restliche Distanz bewegt, um diese in Position für den Zugriff auf Bandmaterial zu platzieren, das von der zweiten Material-Zuführungseinheit bereitgestellt wurde, und nach dem Platzieren des von der zweiten Material-Zuführungseinheit bereitgestellten Bandabschnitts auf der Bearbeitungsfläche und Anheften durch die erste Bandhefteinheit das Zuführen von Bandmaterial mit der ersten Material-Zuführungseinheit über eine bestimmte Distanz über die erste Schneideinrichtung hinaus erfolgt und der Linearantrieb die Bandgreifanordnung über die restliche Distanz bewegt, um diese in Position für den Zugriff auf Bandmaterial zu platzieren, das von der ersten Material-Zuführungseinheit bereitgestellt wurde.

Weiter alternativ können die ersten Greifmittel gebildet sein durch einen ersten Greifmechanismus, der an einem ersten Linearantrieb montiert ist, und die zweiten Greifmittel gebildet sein durch einen zweiten Greifmechanismus, der an einem zweiten Linearantrieb montiert ist; wobei weiter die erste Material-Zuführungseinheit, der erste Greifmechanismus, der erste Linearantrieb, die erste Schneideinrichtung, Führungsbahnen und eine erste Bandhefteinheit aufgewiesen sind in einer ersten Auflegekopfeinheit; die zweite Material-Zuführungseinheit, der zweite Greifmechanismus, der zweite Linearantrieb, die zweite Schneideinrichtung, Führungsbahnen und eine zweite Bandhefteinheit aufgewiesen sind in einer zweiten Auflegekopfeinheit; die erste Auflegekopfeinheit und die zweite Auflegekopfeinheit eingerichtet sind, sich beim Ziehen, Platzieren und Anheften von Bandabschnitten auf der Bearbeitungsfläche des Bewegungstisches abzuwechseln; und dass weiter gleichzeitig mit der Positionierung des von der ersten Material-Zuführungseinheit zugeführten Bandabschnitts in den Führungsbahnen das erste Bewegen des Bewegungstischs in eine Position zur Aufnahme des Bandabschnitts zu einer Position unterhalb der ersten Auflegekopfeinheit, das Zuführen von Bandmaterial mit der zweiten Material-Zuführungseinheit über eine bestimmte Distanz über die zweite Schneideinrichtung hinaus, und das Greifen der Vorderkante des Bandmaterials von der zweiten Material-Zuführungseinheit mit dem zweiten Greifmittel erfolgt; während des Anheftens des von der ersten Material-Zuführungseinheit bereitgestellten Bandabschnitts durch die erste Bandhefteinheit das Greifen der Vorderkante des Bandmaterials von der zweiten Material-Zuführungseinheit mit dem zweiten Greifmittel, das Bewegen des zweiten Greifmittels über die Distanz, die der gewünschten Länge des Bandabschnitts entspricht, in der Richtung weg von der zweiten Schneideinrichtung, und das Abtrennen des Endes des Bandabschnitts von der Material-Zuführungseinheit mit einer zweiten Schneideinrichtung erfolgt; und während des Anheftens des von der zweiten Material-Zuführungseinheit bereitgestellten Bandabschnitts durch die zweite Bandhefteinheit das Bewegen des ersten Greifmittels über die Distanz, die der gewünschten Länge des Bandabschnitts entspricht, in der Richtung weg von der ersten Schneideinrichtung, und das Abtrennen des Endes des Bandabschnitts von der ersten Material-Zuführungseinheit mit der ersten Schneideinrichtung erfolgt.

Weiter bevorzugt kann vorgesehen sein, dass nach dem Anheften des von der ersten Material-Zuführungseinheit bereitgestellten Bandabschnitts durch die erste Bandhefteinheit sich die erste Bandhefteinheit zurück zieht, während das Bewegen des ersten Greifmechanismus zurück in eine Position angrenzend an die erste Schneideinrichtung erfolgt, und der Bewegungstisch an die Position unterhalb der zweiten Auflegekopfeinheit zurückkehrt; während sich der Bewegungstisch zur Position unterhalb der zweiten Auflegekopfeinheit bewegt, das Bewegen des Greifmechanismus weiter in Richtung weg von der ersten Schneideinrichtung, bis der Bandabschnitt an der gewünschten Stelle in den Führungsbahnen positioniert ist, erfolgt; nach dem Anheften des von der zweiten Material-Zuführungseinheit bereitgestellten Bandabschnitts durch die zweite Bandhefteinheit sich die zweite Bandhefteinheit zurück zieht, während das Bewegen des zweiten Greifmechanismus zurück in eine Position angrenzend an die zweite Schneideinrichtung erfolgt, und der Bewegungstisch an die Position unterhalb der ersten Auflegekopfeinheit zurückkehrt; und während sich der Bewegungstisch zur Position unterhalb der ersten Auflegekopfeinheit bewegt, das Bewegen des ersten Greifmechanismus weiter in Richtung weg von der ersten Schneideinrichtung, bis der Bandabschnitt an der gewünschten Stelle in den Führungsbahnen positioniert ist, erfolgt.

Vorzugsweise kann vorgesehen sein, dass das erste Greifmittel und das zweite Greifmittel abwechselnd die von der ersten Material-Zuführungseinheit beziehungsweise von der zweiten Material-Zuführungseinheit bereitgestellte Bandmaterial ziehen.

Alternativ und bevorzugt kann auch vorgesehen sein, dass das Verfahren weiter aufweist ein Festlegen, durch einen Algorithmus, welches von dem ersten und dem zweiten Greifmittel sich in einer Position befindet, den nächsten Bandabschnitt in der kürzesten Zeit zu ziehen und zu platzieren.

In einem zweiten Aspekt wird eine Auflege-Maschine bereitgestellt zum Auflegen und Anheften von Bandabschnitten auf ein herzustellendes Teil, aufweisend: eine erste Material-Zuführungseinheit zum Zuführen von Bandmaterial; erste Greifmittel zum Ziehen von Bandmaterial von der ersten Material-Zuführungseinheit und zum Positionieren des Bandmaterials in Führungsbahnen; eine erste Schneideinrichtung zum Schneiden auf Länge eines Bandabschnitts von der ersten Material-Zuführungseinheit; einen Bewegungstisch; und zumindest eine Bandhefteinheit zum Platzieren auf einer Bearbeitungsfläche des Bewegungstisches und zum Anheften der Bandabschnitte; dadurch gekennzeichnet, dass die Auflege-Maschine weiter aufweist eine zweite Material-Zuführungseinheit zum Zuführen von Bandmaterial; zweite Greifmittel zum Ziehen von Bandmaterial von einer zweiten Material-Zuführungseinheit und zum Positionieren des Bandmaterials in Führungsbahnen; und eine zweite Schneideinrichtung zum Schneiden auf Länge eines Bandabschnitts von der zweiten Material-Zuführungseinheit.

Es kann vorzugsweise vorgesehen sein, dass die ersten Greifmittel gebildet sind durch einen ersten Greifmechanismus, der an einem ersten Linearantrieb montiert ist, und die zweiten Greifmittel gebildet sind durch einen zweiten Greifmechanismus, der an einem zweiten Linearantrieb montiert ist.

Es kann vorzugsweise auch vorgesehen sein, dass die erste Material-Zuführungseinheit auf einer Seite einer Hauptstruktur der Auflege-Maschine montiert ist, und die zweite Material-Zuführungseinheit auf der gegenüberliegenden Seite montiert ist.

Es kann insbesondere auch vorgesehen sein, dass die Material-Zuführungseinheiten, Schneideinrichtungen und Führungsbahnen in einer von der Bandhefteinheit versetzten Position angeordnet sind, und wobei ein Mechanismus vorgesehen ist, um die Führungsbahnen, welche die nächsten Bandabschnitte halten, in eine Position unterhalb der Bandhefteinheit drehen oder versetzen.

Bevorzugt kann auch vorgesehen sein, dass die erste Material-Zuführungseinheit, der erste Greifmechanismus, der erste Linearantrieb, die erste Schneideinrichtung, Führungsbahnen und eine erste Bandhefteinheit aufgewiesen sind in einer ersten Auflegekopfeinheit, und die zweite Material-Zuführungseinheit, der zweite Greifmechanismus, der zweite Linearantrieb, die zweite Schneideinrichtung, Führungsbahnen und eine zweite Bandhefteinheit aufgewiesen sind in einer zweiten Auflegekopfeinheit, und wobei die erste Auflegekopfeinheit und die zweite Auflegekopfeinheit eingerichtet sind, sich beim Ziehen, Platzieren und Anheften von Bandabschnitten auf der Bearbeitungsfläche des Bewegungstisches abwechseln.

Weiter bevorzugt kann ferner vorgesehen sein, dass die ersten und die zweiten Greifmittel gebildet sind durch einen ersten Greifmechanismus und einen zweiten Greifmechanismus einer Bandgreifanordnung, die an einem Linearantrieb montiert ist, wobei der Linearantrieb eine Bewegungsreichweite aufweist, die es dem ersten Greifmechanismus erlaubt, auf Bandmaterial zuzugreifen, das von der ersten Material-Zuführungseinheit bereitgestellt wird, und die es dem zweiten Greifmechanismus erlaubt, auf Bandmaterial zuzugreifen, das von der zweiten Material-Zuführungseinheit bereitgestellt wird.

Vorzugsweise kann die Auflege-Maschine eingerichtet sein, ein Verfahren zum Auflegen und Anheften von Bandabschnitten auf ein herzustellendes Teil auszuführen.

Weiterhin kann die Material-Zuführungseinheit auch einen eigenständigen Antrieb zum Abspulen des Bandmaterials besitzen.

### KURZE BESCHREIBUNG DER ZEICHNUNGEN

Die Ausführungsbeispiele sind besser verständlich unter Bezugnahme auf die nachstehend dargestellten Figuren und Beschreibungen. Die Komponenten in den Figuren sind nicht notwendigerweise maßstabsgerecht, es geht dabei in erster Linie um die Illustration der Grundsätze der Ausführungsbeispiele. Überdies ist zu beachten, dass identische Bezugszeichen in den unterschiedlichen Ansichten der Figuren durchgehend identische Teile bezeichnen. Es zeigen:
- Fig. 1 bis 5: Ansichten einer Auflege-Maschine und deren Komponenten gemäß einem ersten Ausführungsbeispiel;
- Fig. 6 bis 11: Ansichten einer Auflege-Maschine und deren Komponenten gemäß einem zweiten Ausführungsbeispiel; und
- Fig. 12 bis 15: Ansichten einer Auflege-Maschine und deren Komponenten gemäß einem dritten Ausführungsbeispiel.

### DETAILLIERTE BESCHREIBUNG

Die vorliegenden Ausführungsbeispiele betreffen die Ausrüstung und Systeme zur Herstellung moderner Verbundwerkstoffkomponenten mit Hilfe des automatisierten Auflegeverfahrens unter Anwendung von Materialien, die in Form eines aufgespulten Bandes bereitgestellt werden.

Moderne, automatisierte Auflegesysteme benutzen in der Regel mehrere getrennte Teilsysteme zur Durchführung der verschiedenen Funktionen des Abwickelns, Zuführens, Schneidens, Platzierens und Anheftens eines Bandabschnitts auf einer bestimmten Position. Da viele dieser Funktionen normalerweise seriell ablaufen, ist die Nettoproduktivität der gesamten Auflege-Maschine von der Höchstgeschwindigkeit abhängig, mit der die einzelnen Teilsysteme zu arbeiten imstande sind.

Die vorliegenden Ausführungsbeispiele versuchen die Geschwindigkeitsbeschränkungen bestimmter Teilsysteme zu überwinden und signifikante Steigerungen der Produktivität des Gesamtsystems mittels alternativer Konfigurationen der Maschinenkonstruktion zu erreichen.

### Doppelter Greifmechanismus

Die Geschwindigkeit des Teilsystems, das dazu dient, einen Bandabschnitt auf Länge zu ziehen und diesen in Relation zur Bearbeitungsfläche zu positionieren, wirkt sich erheblich auf die Gesamtproduktivität der Auflege-Maschine aus. In der Regel sind solche Systeme mit einem Greifmittel ausgestattet, das an einem Linearantrieb angebracht ist. Das Greifmittel ergreift die Vorderkante eines Bandmaterials und zieht dieses entlang einer Reihe von Führungsbahnen in die gewünschte Länge, wie vom Auflege-Programm für den bestimmten zu produzierenden Teil festgelegt. Leider unterliegen die maximal erzielbare Geschwindigkeit und die Beschleunigung des Linearantriebs praktischen Beschränkungen, die auf einer Kombination mehrerer Faktoren beruhen, etwa Reibung, Verpackungsbeschränkungen und der Masse des Greifmittels und zugehöriger Teile. Überdies bestimmt die maximal erzielbare Kraft, die das Greifmittel auf das Bandmaterial ausüben kann, die maximale Beschleunigungsrate, mit der dieses das Bandmaterial ohne Schlupf zuverlässig ziehen kann.

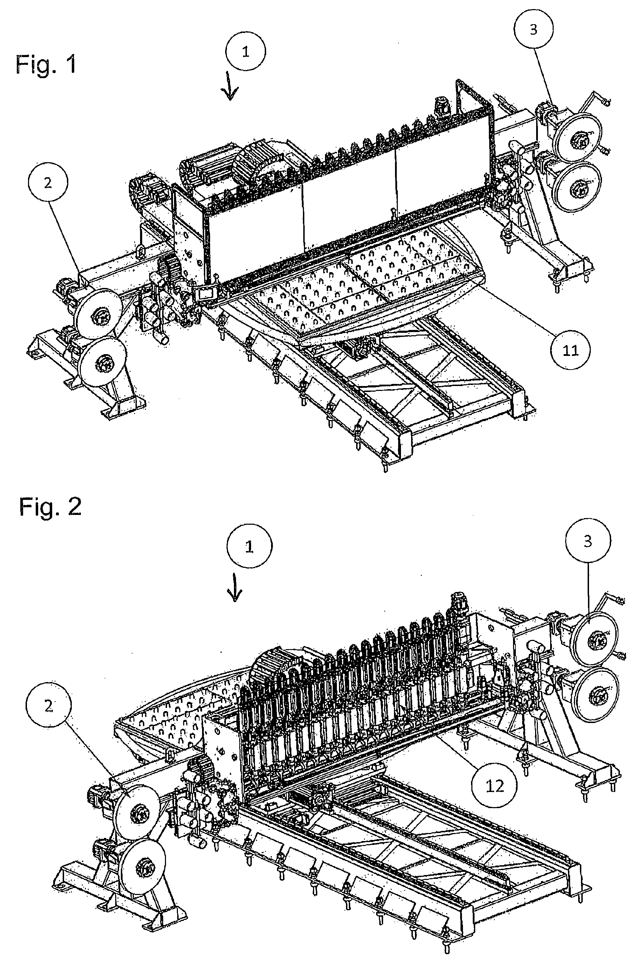

In einem ersten Ausführungsbeispiel (vgl. Figur 1) wird gegen die eingangs beschriebenen Beschränkungen so vorgegangen, dass die Auflege-Maschine mit doppelten Material-Zuführungseinheiten und doppelten Schneideinrichtungen konfiguriert wird. Eine Material-Zuführungseinheit und eine Schneideinrichtung sind an jeder Seite der Führungsbahnen in der Auflege-Maschine angeordnet. Zusätzlich ist die Auflege-Maschine mit doppelten Greifmitteln ausgerüstet, von denen jeder an einem eigenen Linearantrieb montiert ist, so dass ein Greifmittel auf das Bandmaterial zugreifen kann, das von der Material-Zuführungseinheit auf einer Seite der Auflege-Maschine bereitgestellt wird, und ein anderes Greifmittel auf das Bandmaterial zugreifen kann, das von der Material-Zuführungseinheit auf der gegenüberliegenden Seite der Auflege-Maschine bereitgestellt wird.

Mit der oben beschriebenen Konfiguration ist es möglich, nachdem ein Greifmittel einen Bandabschnitt auf Länge gezogen, diesen in den Führungsbahnen positioniert und damit begonnen hat, in ihre entsprechende Material-Zuführungseinheit zurück zu kehren, dass das andere Greifmittel sofort damit beginnen kann, den nächsten Bandabschnitt von der anderen Material-Zuführungseinheit auf der gegenüber liegenden Seite der Auflege-Maschine auf Länge zu ziehen. Bei dieser Anordnung beeinflusst die Zeit, die die beiden Greifmittel zum Durchqueren langer Distanzen benötigen, um auf den nächsten Bandabschnitt zuzugreifen, nicht die Produktivität der Auflege-Maschine. Es wird vorgeschlagen, dass diese Konfiguration potenziell signifikantere Verkürzungen der Gesamtprozessdauer ermöglicht als dies mit den gegenwärtig erreichbaren Steigerungen der Geschwindigkeits- und Beschleunigungskapazitäten des Linearantriebs erreichbar wäre.

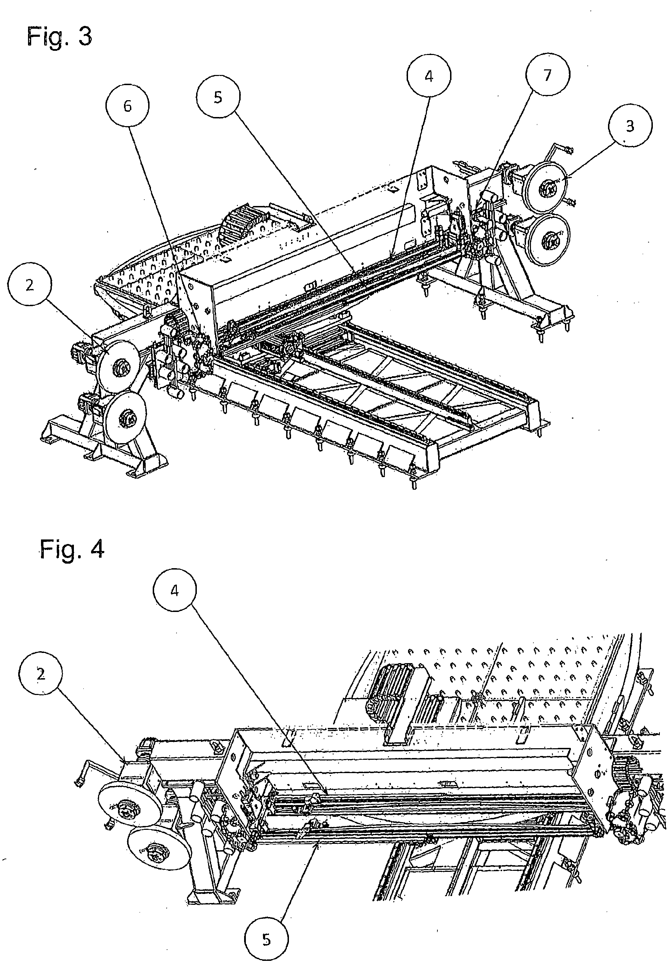

Es folgt eine detaillierte Beschreibung des Systems gemäß dem ersten Ausführungsbeispiel unter Bezugnahme auf die Figuren 1 bis 5.

Die Auflege-Maschine 1 ist mit einer Material-Zuführungseinheit 2 ausgestattet, die auf einer Seite der Hauptstruktur montiert ist, und mit einer anderen Material-Zuführungseinheit 3, die auf der gegenüberliegenden Seite montiert ist. Ein Greifmechanismus 8 für ein Bandmaterial ist am Linearantrieb 4 montiert und zieht Bandabschnitte aus der Material-Zuführungseinheit 2, die von der Schneideinrichtung 6 auf Länge geschnitten und in den Führungsbahnen 10 positioniert werden. Ein weiterer Greifmechanismus 9 für ein Bandmaterial ist am Linearantrieb 5 montiert und zieht Bandabschnitte von der Material-Zuführungseinheit 3, die von der Schneideinrichtung 7 auf Länge geschnitten und in den Führungsbahnen 10 positioniert werden. Eine Bandhefteinheit 12 ist an der Hauptstruktur montiert und bewegt sich aufwärts und abwärts, um Bandabschnitte auf der Bearbeitungsfläche des Bewegungstischs 11 zu platzieren. Der Bewegungstisch 11 kann sich nach Bedarf so bewegen, dass die Bandabschnitte in den gewünschten Positionen und Ausrichtungen platziert werden können.

Das System funktioniert wie folgt:
- Die Material-Zuführungseinheit 2 führt Bandmaterial über eine bestimmte Distanz über die Schneideinrichtung 6 hinaus zu;
- Der Greifmechanismus 8 wird betätigt und greift die Vorderkante des Bandmaterials;
- Der Linearantrieb 4 bewegt den Greifmechanismus 8 über eine bestimmte Distanz, die der gewünschten Länge des Bandabschnitts entspricht, in Richtung der Material-Zuführungseinheit 3;
- Die Schneideinrichtung 6 wird betätigt, um das Ende eines Bandabschnitts von der Materialspule auf der Material-Zuführungseinheit 2 zu trennen;
- Der Linearantrieb 4 bewegt den Greifmechanismus 8 weiter in Richtung der Material-Zuführungseinheit 3, bis der Bandabschnitt an der gewünschten Stelle in den Führungsbahnen 10 positioniert ist;
- Gleichzeitig mit der Positionierung des von der Material-Zuführungseinheit 2 zugeführten Bandabschnitts in den Führungsbahnen:
   ∘ bewegt sich der Bewegungstisch 11 in Position zur Aufnahme des Bandabschnitt;
   ∘ führt die Material-Zuführungseinheit 3 Bandmaterial über eine bestimmte Distanz über die Schneideinrichtung 7 hinaus zu;
- Nachdem der von der Material-Zuführungseinheit 2 bereitgestellte Bandabschnitt auf der Bearbeitungsfläche platziert und von der Bandhefteinheit 12 festgeheftet wurde, bewegt der Linearantrieb 4 den Greifmechanismus 8 zurück in eine Position angrenzend an die Schneideinrichtung 6;
- Während sich der Greifmechanismus 8 zurück in seine Position angrenzend an die Schneideinrichtung 6 bewegt, wird der Greifmechanismus 9 betätigt und ergreift die Vorderkante des Bandmaterials, der von der Material-Zuführungseinheit 3 bereitgestellt wird;
- Der Linearantrieb 5 bewegt den Greifmechanismus 9 über eine bestimmte Distanz, die der erwünschten Länge des nächsten Bandabschnitts entspricht, in Richtung der Material-Zuführungseinheit 2;
- Die Schneideinrichtung 7 wird betätigt, um das Ende des Bandabschnitts von der Materialspule auf der Material-Zuführungseinheit 3 zu trennen;
- Der Linearantrieb 5 bewegt den Greifmechanismus 9 weiter in Richtung der Material-Zuführungseinheit 2, bis der Bandabschnitt an der gewünschten Stelle in den Führungsbahnen 10 positioniert ist;
- Gleichzeitig mit der Positionierung des von der Material-Zuführungseinheit 3 zugeführten Bandabschnitts in den Führungsbahnen:
   o bewegt sich der Bewegungstisch 11 in Position zur Aufnahme des Bandabschnitts;
   o führt die Material-Zuführungseinheit 2 Bandmaterial über eine bestimmte Distanz über die Schneideinrichtung 6 hinaus zu;
- Nachdem der von der Material-Zuführungseinheit 3 bereitgestellte Bandabschnitt auf der Bearbeitungsfläche platziert und von der Bandhefteinheit 12 festgeheftet wurde, bewegt der Linearantrieb 5 den Greifmechanismus 9 zurück in eine Position angrenzend an die Schneideinrichtung 7;
- Während sich der Greifmechanismus 9 zurück in seine Position angrenzend an die Schneideeinrichtung 7 bewegt, wird der Greifmechanismus 8 erneut betätigt und ergreift die Vorderkante des Bandmaterials, der von der Material-Zuführungseinheit 2 bereitgestellt wird;

Die voranstehende Abfolge von Vorgängen wird wiederholt, wobei die Greifmechanismen 8 und 9 abwechselnd die von den Material-Zuführungseinheiten 2 bzw. 3 bereitgestellten Bandabschnitte ziehen und platzieren.

Neben dem beschriebenen, einfachen Reziproken-Modus kann das System auch in einem "intelligenten" Modus für Situationen betrieben werden, in denen ein Bandabschnitt sehr kurz ist und die Zuführung des Bandmaterials von der gegenüberliegenden Seite der Auflege-Maschine mehr Zeit in Anspruch nehmen kann, als dies bei einer erneuten Nutzung derselben Material-Zuführungseinheit der Fall wäre. Ein Algorithmus legt fest, welcher Greifmechanismus sich in der Position befindet, den nächsten Bandabschnitt in der kürzesten Zeit zu ziehen und zu platzieren, um die Effizienz des Auflege-Arbeitsablaufes zu optimieren.

Ein alternatives Ausführungsbeispiel des oben beschriebenen Systems wird in Aussicht gestellt, bei dem die Material-Zuführungseinheiten, Schneideinrichtungen und Führungsbahnen in einer von der Bandhefteinheit versetzten Position angeordnet sind, anstatt mit dieser in einer Linie angeordnet zu sein. Eine solche Konfiguration würde eine klare Bahn angrenzend und parallel zu der Bandhefteinheit schaffen, entlang der jeder Greifmechanismus den nächsten Bandabschnitt auf Länge ziehen und positionieren könnte, während der aktuelle Bandabschnitt auf der Bearbeitungsfläche in Position geheftet wird.

Nachdem die Bandhefteinheit den Bandabschnitt angeheftet und sich vollständig zurückgezogen hat, würde ein zusätzlicher Mechanismus die Führungsbahnen, welche den nächsten Bandabschnitt halten, in eine Position unterhalb der Bandhefteinheit drehen oder versetzen. Die Führungsbahnen und die Bandhefteinheit würden sodann erneut abwärts wandern, um den neuen Bandabschnitt auf der Bearbeitungsfläche zu platzieren und in der üblichen Weise anzuheften.

Das Alternativsystem würde auf nahezu identische Weise mit dem voranstehend beschriebenen System funktionieren, würde aber die Möglichkeit kürzerer Zykluszeiten bieten, indem es den Greifmechanismus aus der Beschränkung befreit, warten zu müssen, bis sich die Bandhefteinheit vollständig zurückgezogen hat, ehe das nächste Bandmaterial herausgezogen und in den Führungsbahnen platziert werden könnte.

Mit den oben beschriebenen Betriebskonfigurationen können verschiedene Vorteile gewonnen werden. So kann die Distanz und damit die unproduktive Zeit zur Positionierung des Greifmechanismus für den nächsten Bandabschnitt verkürzt werden, woraus sich erhebliche Einsparungen im Laufe der Herstellung einer großen Anzahl an Teilen erzielen lassen. Die zweifachen Quellen der Materialzuführung können die Zeit verkürzen, die zur Ergänzung verbrauchter Materialspulen verbraucht wird. Es ist auch möglich, dass, wenn eine Materialspule auf einer der Material-Zuführungseinheiten ausläuft, das System so programmiert ist, dass es vorübergehend ausschließlich die andere Material-Zuführungseinheit benützt. Die abgelaufene Spule kann somit sicher ersetzt werden, ohne den Produktionsvorgang zu unterbrechen.

### Doppelte Auflegekopfeinheit und einzelner Bewegungstisch

Die Geschwindigkeit des Teilsystems, das dazu dient, einen Bandabschnitt auf Länge zu ziehen und diesen in Relation zur Bearbeitungsfläche zu positionieren, wirkt sich erheblich auf die Gesamtproduktivität der Auflege-Maschine aus. In der Regel sind solche Systeme mit einem Greifmittel ausgestattet, das an einem Linearantrieb angebracht ist. Das Greifmittel ergreift die Vorderkante eines Bandmaterials und zieht dieses entlang einer Reihe von Führungsbahnen in die gewünschte Länge, wie vom Auflege-Programm für den bestimmten zu produzierenden Teil festgelegt. Leider unterliegen die maximal erzielbare Geschwindigkeit und die Beschleunigung des Linearantriebs praktischen Beschränkungen, die auf einer Kombination mehrerer Faktoren beruhen, etwa Reibung, Verpackungsbeschränkungen und der Masse des Greifmittels und zugehöriger Teile. Überdies bestimmt die maximal erzielbare Kraft, die das Greifmittel auf das Bandmaterial ausüben kann, die maximale Beschleunigungsrate, mit der dieses das Bandmaterial ohne Schlupf zuverlässig ziehen kann.

Ein weiterer Faktor mit beträchtlichem Einfluss auf die Gesamtproduktivität der Auflege-Maschine ist die Geschwindigkeit des Teilsystems, das dazu verwendet wird, die einzelnen Bandabschnitte auf dem gerade produzierten Teil in Position zu heften. Die erforderliche Zeit, um einen Bandabschnitt eines Thermoplast-Verbundwerkstoffes mit einem anderen zu verschmelzen, ist weitestgehend eine feste Konstante, deren einzige Variationen von der Banddicke und der Harzzusammensetzung abhängen.

Potentielle Verkürzungen der zur Ausführung des Heftvorgangs benötigten Zeit müssen deshalb aus der Abfolge von Bewegungen gewonnen werden, die dazu nötig sind, das Heft-Teilsystem in Kontakt mit dem Bandabschnitt zu bringen und anschließend in seine Ausgangsposition zurückzuziehen.

Wie im Falle des Teilsystems, das zum Ziehen eines Bandabschnitts auf Länge und zum Positionieren desselben relativ zur Bearbeitungsfläche benützt wird, sind größere Steigerungen der Geschwindigkeit und der Beschleunigung der Bewegungsmechanismen aufgrund derselben Faktoren wie oben erwähnt (Reibung, Verpackungsbeschränkungen und die Masse des Systems mit Zubehörteilen) praktisch nicht zu erzielen.

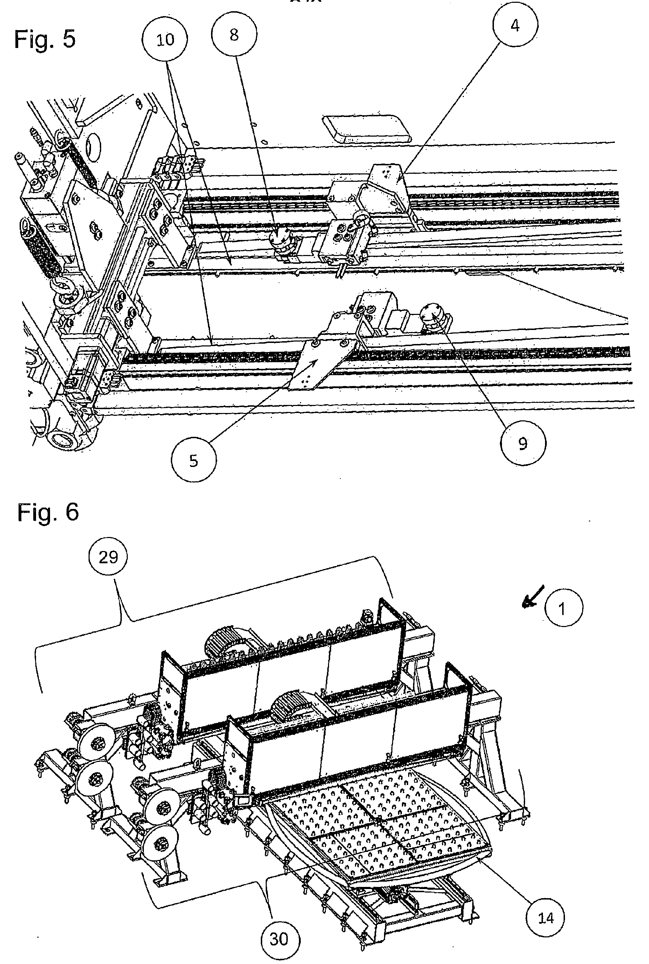

In einem zweiten Ausführungsbeispiel (vgl. Figur 6) wird gegen die oben beschriebenen Beschränkungen so vorgegangen, dass die Auflege-Maschine mit doppelter Auflegekopfeinheit konfiguriert wird, die so angeordnet sind, dass sie für einen einzelnen Bewegungstisch zugänglich sind. Die Auflegekopfeinheiten sind voneinander unabhängig und jeweils mit einer eigenen Material-Zuführungseinheit, Schneideinrichtung, Greifmittel mit zugehörigem Linearantrieb, Führungsbahnen und Bandhefteinheit konfiguriert.

Mit der oben beschriebenen Konfiguration kann ein Bandabschnitt auf Länge gezogen, in den Führungsbahnen positioniert und mit dem ersten Auflegekopfeinheit auf dem zu produzierenden Teil in Position geheftet werden, während gleichzeitig der nächste Bandabschnitt auf Länge gezogen und auf dem zweiten Auflegekopfeinheit in den Führungsbahnen positioniert wird. Nachdem der erste Bandabschnitt von der ersten Auflegekopfeinheit angeheftet wurde, befördert der Bewegungstisch das zu produzierende Teil zur zweiten Auflegekopfeinheit, währenddessen der nächste Bandabschnitt vorbereitet und in Position gebracht ist, um am zu produzierenden Teil angeheftet zu werden. Somit wechselt der Bewegungstisch konstant zwischen den zwei Auflegekopfeinheiten, um jeden neuen Bandabschnitt aufzunehmen, ohne funktionslos warten zu müssen, während der Greifmechanismus seine Aufgabe ausführt, einen Bandabschnitt auf Länge zu ziehen und diesen in den Führungsbahnen zu positionieren.

Bei dieser Anordnung beeinträchtigen weder die Zeit, die ein Greifmittel benötigt, um lange Distanzen zurückzulegen, um auf das nächste Bandmaterial zuzugreifen, noch die Zeit, die für den Rückzug des Bandheftsystems erforderlich ist, signifikant die Produktivität der Auflege-Maschine. Es wird vorgeschlagen, dass diese Konfiguration potenziell signifikantere Verkürzungen der Gesamtverfahrenszeiten ermöglicht als die derzeit erreichbaren Steigerungen der Geschwindigkeit und der Beschleunigungskapazitäten der Linearantriebe, die zur Positionierung eines Greifmechanismus oder einer Bandhefteinheit benützt werden.

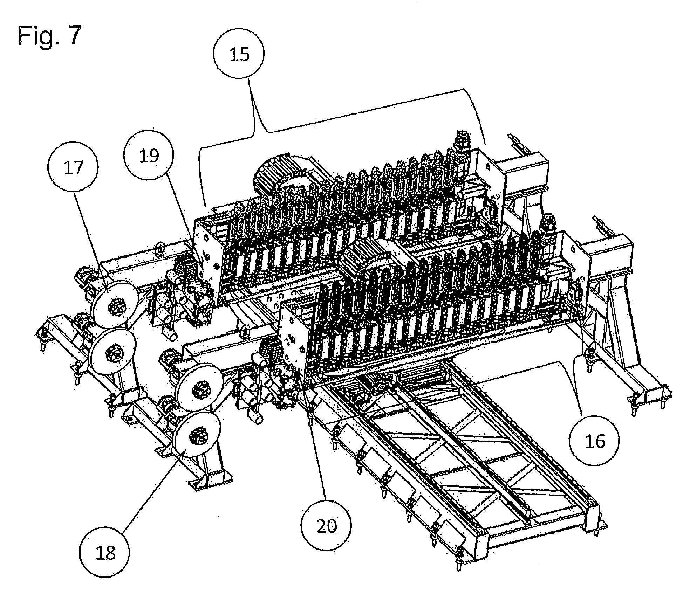

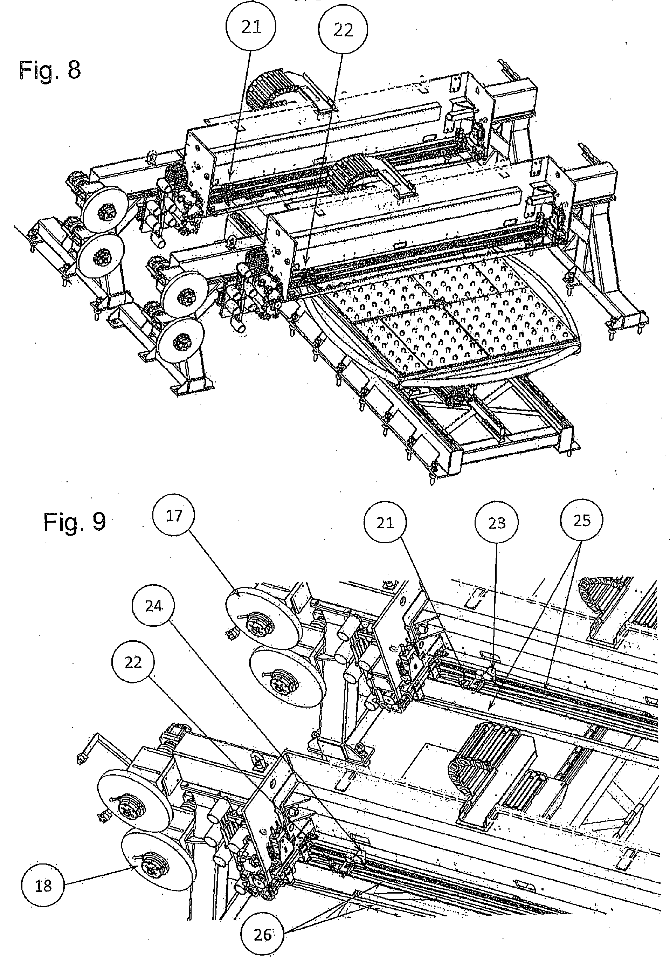

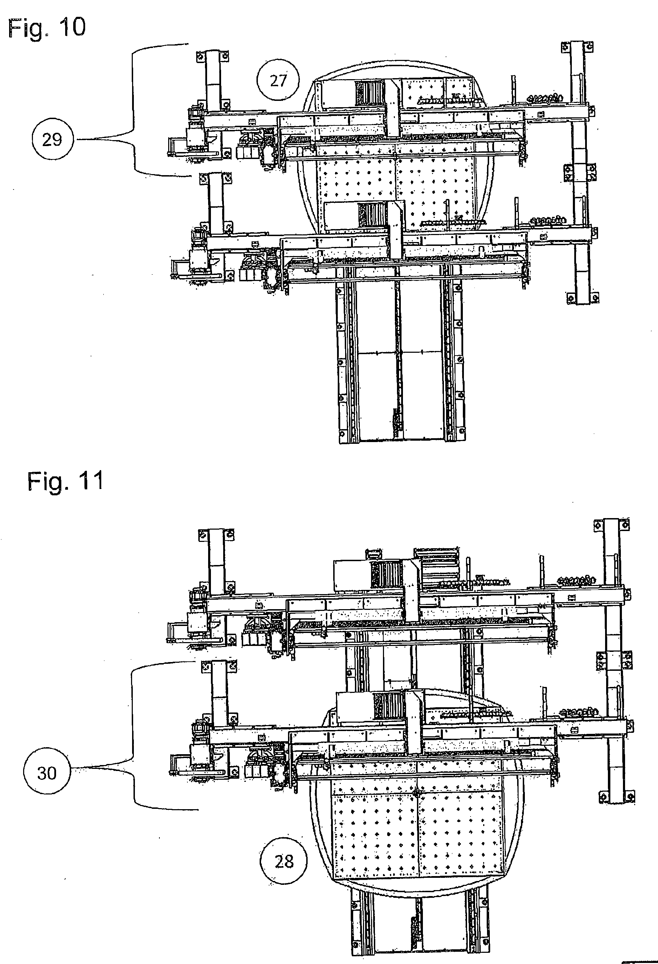

Es folgt eine detaillierte Beschreibung des Systems unter Bezugnahme auf die Figuren 6 bis 11.

Die Auflege-Maschine 1 ist mit einer ersten Auflegekopfeinheit 29, einer zweiten Auflegekopfeinheit 30 und einem Bewegungstisch 14 bestückt. Die erste Auflegekopfeinheit 29 umfasst eine Material-Zuführungseinheit 17, eine Schneideinrichtung 19, eine Bandhefteinheit 15, einen Greifmechanismus 21, einen Linearantrieb 23 und Führungsbahnen 25.

Die zweite Auflegekopfeinheit 30 umfasst eine Material-Zuführungseinheit 18, eine Schneideinrichtung 20, eine Bandhefteinheit 16, einen Greifmechanismus 22, einen Linearantrieb 24 und Führungsbahnen 26.

Der Bewegungstisch 14 kann um eine mittlere Achse rotieren und sich auch entlang eines linearen Gleitwegs vorwärts bewegen, wobei dieser eine ausreichend große Reichweite zur Positionierung auf jeder Stelle seiner Bearbeitungsfläche besitzt, so dass Bandabschnitte mit der ersten Auflegekopfeinheit 29 oder der zweiten Auflegekopfeinheit 30 am gewünschten Ort und in der gewünschten Ausrichtung platziert werden können.

Das System funktioniert wie folgt:
- Die Material-Zuführungseinheit 17 führt Bandmaterial über eine bestimmte Distanz über die Schneideinrichtung 19 hinaus zu;
- Der Greifmechanismus 21 wird betätigt und greift die Vorderkante des Bandmaterials;
- Der Linearantrieb 23 bewegt den Greifmechanismus 21 über eine bestimmte Distanz, die der gewünschten Länge eines Bandabschnitts entspricht, in Richtung weg von der Schneideinrichtung 19;
- Die Schneideinrichtung 19 wird erneut betätigt, um das Ende des Bandabschnitts von der Materialspule auf der Material-Zuführungseinheit 17 zu trennen;
- Der Linearantrieb 23 bewegt den Greifmechanismus 21 weiter in Richtung weg von der Schneideinrichtung 19, bis der Bandabschnitt an der gewünschten Stelle in den Führungsbahnen 25 positioniert ist;
- Gleichzeitig mit der Positionierung des von der Material-Zuführungseinheit 17 zugeführten Bandabschnitts an der gewünschten Stelle in den Führungsbahnen 25 durch den Greifmechanismus 21:
   o bewegt sich der Bewegungstisch 14 zur Position 27 unterhalb der ersten Auflegekopfeinheit 29;
   o führt die Material-Zuführungseinheit 18 auf der zweiten Auflegekopfeinheit 30 Bandmaterial über eine bestimmte Distanz über die Schneideinrichtung 20 hinaus zu;
   o wird der Greifmechanismus 22 betätigt und greift die Vorderkante des Bandmaterials von der Material-Zuführungseinheit 18;
- Der Bandabschnitt von der Materialspule auf der Material-Zuführungseinheit 17 wird auf der Bearbeitungsfläche des Bewegungstisches 14 platziert, und die Bandhefteinheit 15 wandert abwärts, um das Band zu kontaktieren und auf dem gerade produzierten Teil anzuheften;
- Während der Bandabschnitt von der Material-Zuführungseinheit 17 in Position angeheftet wird:
   o bewegt der Linearantrieb 24 den Greifmechanismus 22 über eine festgelegte Distanz, die der gewünschten Länge des nächsten Bandabschnitts entspricht, weg von der Schneideinrichtung 20;
   o wird die Schneideinrichtung 20 erneut betätigt, um das Ende des Bandabschnitts von der Materialspule auf der Material-Zuführungseinheit 18 zu trennen;
- Nachdem der von der Material-Zuführungseinheit 17 bereitgestellte Bandabschnitt angeheftet wurde:
   o zieht sich die Bandhefteinheit 15 zurück, während der Linearantrieb 23 den Greifmechanismus 21 zurück in eine Position angrenzend an die Schneideinrichtung 19 bewegt;
   o kehrt der Bewegungstisch 14 an die Position 28 unterhalb der zweiten Auflegekopfeinheit 30 zurück;
- Während sich der Bewegungstisch 14 zur Position 28 bewegt:
   o fährt der Linearantrieb 24 damit fort, den Greifmechanismus 22 weg von der Schneideinrichtung 20 zu bewegen, bis der Abschnitt des Bandes an der gewünschten Stelle in den Führungsbahnen 26 positioniert ist;
- Mit dem Bewegungstisch 14 an Position 28 wird der Bandabschnitt von der Materialspule auf der Material-Zuführungseinheit 18 auf der Bearbeitungsfläche des Bewegungstisches 14 platziert, und die Bandhefteinheit 16 wandert weiter abwärts, um das Band zu kontaktieren und auf dem zu produzierenden Teil anzuheften;
- Während der Bandabschnitt von der Material-Zuführungseinheit 18 in Position angeheftet wird:
   o bewegt der Linearantrieb 23 den Greifmechanismus 21 erneut über eine festgelegte Distanz, die der gewünschten Länge des nächsten Bandabschnitts entspricht, weg von der Schneideinrichtung 19;
   o wird die Schneideinrichtung 19 erneut betätigt, um das Ende des Bandabschnitts von der Materialspule auf der Material-Zuführungseinheit 17 zu trennen;
- Nachdem der von der Material-Zuführungseinheit 18 bereitgestellte Bandabschnitt angeheftet wurde:
   o zieht sich die Bandhefteinheit 16 zurück, während der Linearantrieb 24 den Greifmechanismus 22 zurück in eine Position angrenzend an die Schneideinrichtung 20 bewegt;
   o kehrt der Bewegungstisch 14 an die Position 27 unterhalb der zweiten Auflegekopfeinheit 29 zurück;
- Während sich der Bewegungstisch 14 zurück zur Position 27 bewegt:
   o fährt der Linearantrieb 23 damit fort, den Greifmechanismus 21 weg von der Schneideinrichtung 19 zu bewegen, bis der Abschnitt des Bandes an der gewünschten Stelle in den Führungsbahnen 25 positioniert ist.

Die voranstehende Abfolge von Vorgängen wird kontinuierlich wiederholt, wobei sich die erste Auflegekopfeinheit 29 und die zweite Auflegekopfeinheit 30 beim Ziehen, Platzieren und Anheften von Bandabschnitten auf der Bearbeitungsfläche des Bewegungstisches 14 abwechseln.

Ein alternatives Ausführungsbeispiel des oben beschriebenen Systems wird in Aussicht gestellt, bei dem die Material-Zuführungseinheiten, Schneideinrichtungen und Führungsbahnen auf jeder Auflegekopfeinheit in einer von der Bandhefteinheit versetzten Position angeordnet sein können, anstatt mit dieser in einer Linie angeordnet zu sein. Eine solche Konfiguration würde eine klare Bahn angrenzend und parallel zu jeder Bandhefteinheit schaffen, entlang der jeder Greifmechanismus den nächsten Bandabschnitt auf Länge ziehen und positionieren könnte, während der aktuelle Bandabschnitt auf der Bearbeitungsfläche in Position geheftet wird.

Nachdem die Bandhefteinheit den Bandabschnitt angeheftet und sich vollständig zurückgezogen hat, würde ein zusätzlicher Mechanismus die Führungsbahnen, welche den nächsten Bandabschnitt halten, in eine Position unterhalb der Bandhefteinheit drehen oder versetzen. Die Führungsbahnen und die Bandhefteinheit würden sodann erneut abwärts wandern, um den neuen Bandabschnitt auf der Bearbeitungsfläche zu platzieren und in der üblichen Weise anzuheften.

Das Alternativsystem würde auf nahezu identische Weise mit dem voranstehend beschriebenen System funktionieren, würde aber die Möglichkeit kürzerer Zykluszeiten bieten, indem es den Greifmechanismus aus der Beschränkung befreit, warten zu müssen, bis sich die Bandhefteinheit vollständig zurückgezogen hat, ehe der nächste Bandabschnitt herausgezogen und in den Führungsbahnen platziert werden könnte.

Mit den oben beschriebenen Betriebskonfigurationen können verschiedene Vorteile gewonnen werden. So kann die unproduktive Zeit zur Positionierung des

Greifmechanismus für den nächsten Bandabschnitt aus der Produktionszykluszeit entfernt werden, woraus sich erhebliche Einsparungen im Laufe der Herstellung einer großen Anzahl an Teilen erzielen lassen. Auch kann die unproduktive Zeit für den Rückzug der Bandhefteinheit weg von der Bearbeitungsfläche des Bewegungstisches aus der Produktionszykluszeit entfernt werden, woraus sich ebenfalls signifikante Einsparungen im Lauf der Herstellung einer großer Anzahl an Teilen erzielen lassen. Die zweifachen Quellen der Materialzuführung können die Zeit verkürzen, die zur Ergänzung verbrauchter Materialspulen konsumiert wird. Wenn eine Materialspule auf einer der Material-Zuführungseinheiten ausläuft, kann das System so programmiert werden, dass es vorübergehend die andere Auflegekopfeinheit benützt. Die abgelaufene Spule kann somit sicher ersetzt werden, ohne den Produktionsvorgang zu unterbrechen.

### Zweiseitiger Greifmechanismus

Die Geschwindigkeit des Teilsystems, das dazu dient, einen Bandabschnitt auf Länge zu ziehen und diesen in Relation zur Bearbeitungsfläche zu positionieren, wirkt sich erheblich auf die Gesamtproduktivität der Auflege-Maschine aus. In der Regel sind solche Systeme mit einem Greifmittel ausgestattet, das an einem Linearantrieb angebracht ist. Das Greifmittel ergreift die Vorderkante eines Bandmaterials und zieht dieses entlang einer Reihe von Führungsbahnen in die gewünschte Länge, wie vom Auflege-Programm für den bestimmten zu produzierenden Teil festgelegt. Leider unterliegen die maximal erzielbare Geschwindigkeit und die Beschleunigung des Linearantriebs praktischen Beschränkungen, die auf einer Kombination mehrerer Faktoren beruhen, etwa Reibung, Verpackungsbeschränkungen und der Masse des Greifmittels und zugehöriger Teile. Überdies bestimmt die maximal erzielbare Kraft, die das Greifmittel auf das Bandmaterial ausüben kann, die maximale Beschleunigungsrate, mit der dieses das Bandmaterial ohne Schlupf zuverlässig ziehen kann.

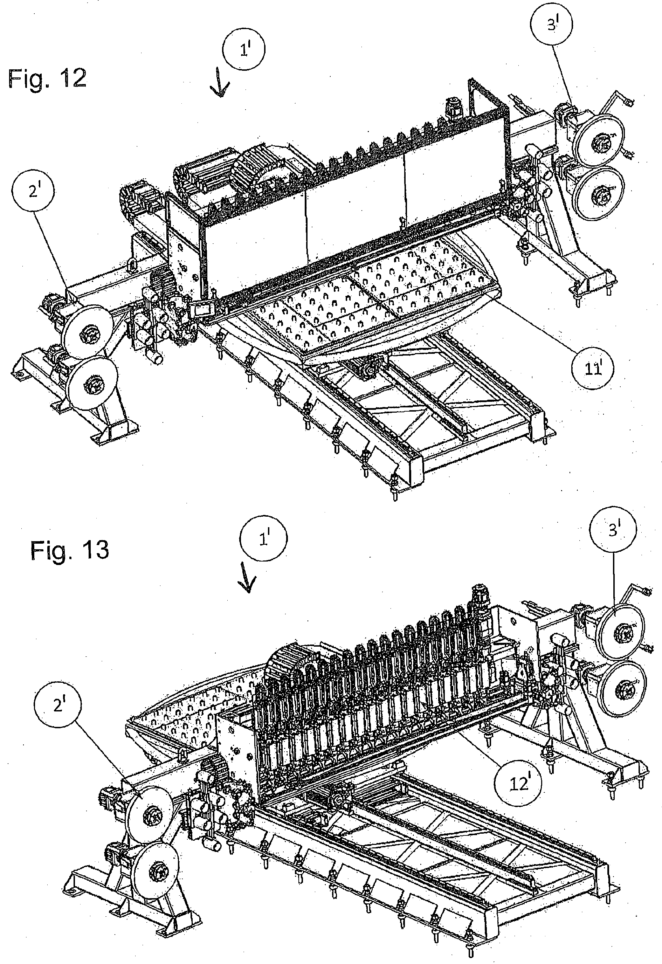

In einem dritten Ausführungsbeispiel (vgl. Figur 12) wird gegen die oben beschriebenen Beschränkungen so vorgegangen, dass die Auflege-Maschine mit doppelten Material-Zuführungseinheiten und doppelten Schneideinrichtungen konfiguriert wird. Eine Material-Zuführungseinheit und eine Schneideinrichtung werden an jeder Seite der Materialführungsbahnen in der Auflege-Maschine angeordnet. Zusätzlich ist die Bandgreifanordnung mit zwei aneinander anschließenden Greifmechanismen als Greifmittel ausgerüstet. Ferner hat der Linearantrieb ausreichend Bewegungsreichweite, um einem Greifmechanismus den Zugriff auf Bandmaterial zu erlauben, das von der Material-Zuführungseinheit auf einer Seite der Auflege-Maschine bereitgestellt wird, und dem anderen Greifmechanismus den Zugriff auf Bandmaterial, das von der Material-Zuführungseinheit auf der gegenüberliegenden Seite der Auflege-Maschine bereitgestellt wird.

Nachdem die Bandgreifanordnung in der oben beschriebenen Ausführung mittels eines Greifmechanismus einen Bandabschnitt auf Länge gezogen und in den Führungsbahnen positioniert hat, befindet sie sich bereits weitestgehend in der Position, den nächsten Bandabschnitt von der gegenüberliegenden Seite der Auflege-Maschine zu ziehen. Diese Anordnung eliminiert die Notwendigkeit für die Bandgreifanordnung, längere Distanzen zu überqueren, um auf den nächsten Bandabschnitt zu greifen. Es wird vorgeschlagen, dass diese Konfiguration potenziell signifikantere Verkürzungen der Gesamtverfahrensdauer ermöglicht als jene, die durch die derzeit erreichbaren Steigerungen der Geschwindigkeit und der Beschleunigungskapazitäten des Linearantriebs erreichbar sind.

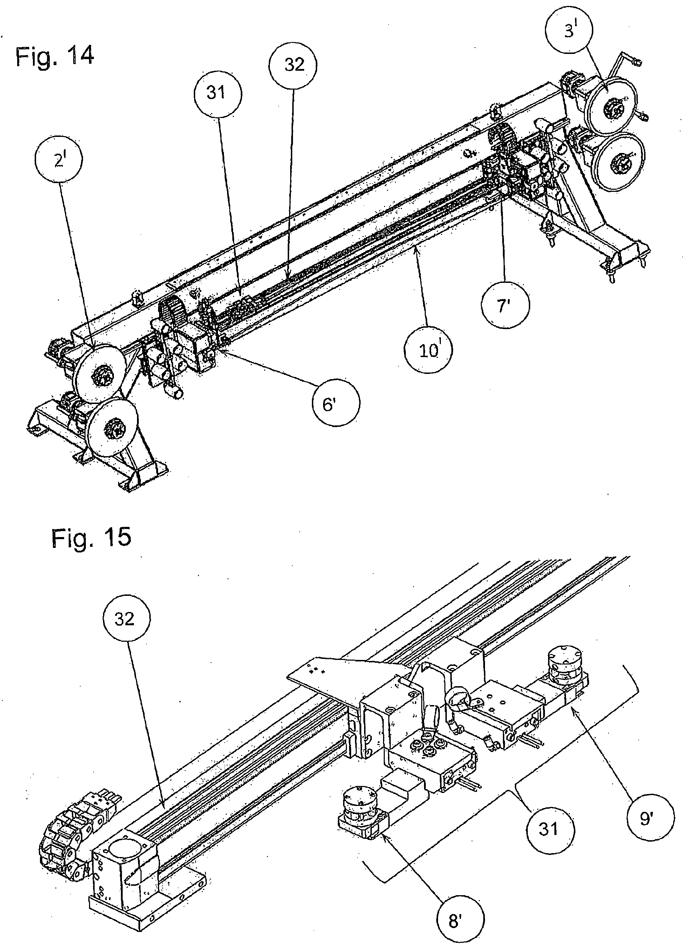

Es folgt eine detaillierte Beschreibung des Systems unter Bezugnahme auf Figuren 12 bis 15:
Die Auflege-Maschine 1' ist mit einer Material-Zuführungseinheit 2' konfiguriert, die auf einer Seite der Hauptstruktur montiert ist, und mit einer anderen Material-Zuführungseinheit 3', die auf der gegenüberliegenden Seite montiert ist. Die Bandgreifanordnung 31 zieht Bandmaterial entlang der Führungsbahnen 10' auf die gewünschte Länge. Die Bandgreifanordnung 31 umfasst einen Greifmechanismus 8' zum Ergreifen von Bandmaterial, das von der Material-Zuführungseinheit 2' bereitgestellt wird, und einen Greifmechanismus 9' zum Ergreifen von Bandmaterial, das von der Material-Zuführungseinheit 3' bereitgestellt wird. Die Bandgreifanordnung 31 wird mit dem Linearantrieb 32 entlang der Führungsbahnen 10' bewegt. Das von der Material-Zuführungseinheit 2' bereitgestellte Bandmaterial wird von der Schneideinrichtung 6' auf Länge zu Bandabschnitten geschnitten, und das von der Material-Zuführungseinheit 3' bereitgestellte Bandmaterial wird von der Schneideinrichtung 7' auf Länge zu Bandabschnitten geschnitten. Eine Bandhefteinheit 12' ist an der Hauptstruktur montiert und bewegt sich aufwärts und abwärts, um Bandabschnitte auf der Bearbeitungsfläche des Bewegungstisches 11' zu platzieren. Der Bewegungstisch 11' kann sich nach Bedarf so bewegen, dass die Bandabschnitte in den gewünschten Positionen und Ausrichtung platziert werden können.

Das System funktioniert wie folgt:
- Die Material-Zuführungseinheit 2' führt Bandmaterial über eine bestimmte Distanz über die Schneideinrichtung 6' hinaus zu;
- Der Greifmechanismus 8' auf der Bangreifanordnung 31 wird betätigt und greift die Vorderkante des Bandmaterials;
- Der Linearantrieb 32 bewegt die Bandgreifanordnung 31 über eine bestimmte Distanz, die der gewünschten Länge des Bandabschnitts entspricht, in Richtung der Material-Zuführungseinheit 3';
- Die Schneideinrichtung 6' wird betätigt, um das Ende des Bandabschnitts von der Materialspule auf der Material-Zuführungseinheit 2' zu trennen;
- Der Linearantrieb 32 bewegt die Bangreifanordnung 31 weiter in Richtung der Material-Zuführungseinheit 3', bis der Bandabschnitt an der gewünschten Stelle in den Führungsbahnen 10' positioniert ist;
- Gleichzeitig mit der Positionierung des von der Material-Zuführungseinheit 2' zugeführten Bandabschnitts in den Führungsbahnen 10' bewegt sich der Bewegungstisch 11' in Position zur Aufnahme des Bandabschnittes;
- Nachdem der Bandabschnitt auf der Bearbeitungsfläche platziert und von der Bandhefteinheit 12' angeheftet ist:
   o führt die Material-Zuführungseinheit 3' Bandmaterial über eine festgelegte Distanz über die Schneideinrichtung 7' hinaus zu;
   o bewegt der Linearantrieb 32 die Bangreifanordnung 31 über die restliche Distanz, um diese in Position für den Zugriff auf Bandmaterial zu platzieren, das von der Material-Zuführungseinheit 3' bereitgestellt wurde.
- Der Greifmechanismus 9' auf der Bandgreifanordnung 31 wird betätigt und greift die Vorderkante des Bandmaterials;
- Der Linearantrieb 32 bewegt die Bandgreifanordnung 31 über eine bestimmte Distanz, die der gewünschten Länge des nächsten Bandabschnitts entspricht, in Richtung zurück zur Material-Zuführungseinheit 2';
- Die Schneideinrichtung 7' wird betätigt, um das Ende des Bandabschnitts von der Materialspule auf der Material-Zuführungseinheit 3' zu trennen;
- Der Linearantrieb 32 bewegt die Bandgreifanordnung 31 weiter in Richtung der Material-Zuführungseinheit 2', bis der Bandabschnitt an der gewünschten Stelle in den Führungsbahnen 10' positioniert ist;
- Gleichzeitig mit der Positionierung des von der Material-Zuführungseinheit 3' zugeführten Bandabschnitts in den Führungsbahnen 10' bewegt sich der Bewegungstisch 11' in Position zur Aufnahme des Bandabschnittes;
- Nachdem der Bandabschnitt auf der Bearbeitungsfläche platziert und von der Bandhefteinheit 12' festgeheftet wurde:
   o führt die Material-Zuführungseinheit 2' erneut Bandmaterial über eine bestimmten Distanz über die Schneideinrichtung 6' hinaus zu;
   o bewegt der Linearantrieb 32 die Bandgreifanordnung 31 über die restliche Distanz, um sie in Position für den Zugriff auf Bandmaterial zu platzieren, das von der Material-Zuführungseinheit 2' bereitgestellt wurde.

Die voranstehende Abfolge von Vorgängen wird wiederholt, wobei der Linearantrieb 32 die Richtung umkehrt, nachdem jeder Bandabschnitt platziert ist, und der Greifmechanismus 8' und 9' abwechselnd Bandmaterial aus den Material-Zuführungseinheiten 2' bzw. 3' zieht.

Neben dem beschriebenen, einfachen Reziproken-Modus kann das System auch in einem "intelligenten" Modus für Situationen betrieben werden, in denen ein Bandabschnitt sehr kurz ist und die Bewegung der Greifanordnung auf die gegenüberliegende Seite mehr Zeit in Anspruch nehmen kann, als dies bei einer Rückkehr zur selben Material-Zuführungseinheit der Fall wäre. Ein Algorithmus legt fest, welche Material-Zuführungseinheit sich näher bei der Bandgreifanordnung befindet, um die erforderliche Querungszeit bis zum Erreichen einer Material-Zuführungseinheit zu minimieren.

Mit den oben beschriebenen Betriebskonfigurationen können folgende Vorteile gewonnen werden:
- Die Distanz und damit die unproduktive Zeit zur Positionierung des Bandgreifanordnung für den nächsten Bandabschnitt können verkürzt werden, woraus sich erhebliche Einsparungen im Laufe der Herstellung einer großen Anzahl an Teilen erzielen lassen;
- Die zweifachen Quellen der Materialzuführung können die Zeit verkürzen, die zur Ergänzung verbrauchter Materialspulen verbraucht wird. Wenn eine Materialspule auf einer der Material-Zuführungseinheiten ausläuft, ist das System so programmiert, dass es vorübergehend ausschließlich die andere Material-Zuführungseinheit benützt wird. Die abgelaufene Materialspule kann somit sicher ersetzt werden, ohne den Produktionsvorgang zu unterbrechen.

Die voranstehende Offenbarung der Ausführungsbeispiele wird für Zwecke der Illustration und Beschreibung vorgelegt. Es ist nicht beabsichtigt, hiermit erschöpfende Ausführungen zu diesem Gegenstand vorzubringen oder andere Ausführungsbeispiele auf die präzisen Formen sowie offenbart einschränkend festzulegen. Für einschlägig bewanderte Fachpersonen sind im Lichte der voranstehenden Offenbarung zahlreiche Variationen und Modifikationen der hier beschriebenen Ausführungsbeispiele offensichtlich.

Bei der Beschreibung repräsentativer Ausführungsbeispiele der vorliegenden Ausführungsbeispiele sind in der vorstehenden Beschreibung das Verfahren und/oder die Methode der vorliegenden Ausführungsbeispiele möglicherweise als ganz bestimmte Abfolge von Arbeitsschritten dargestellt. Indessen kann das Verfahren oder die Methode in dem Ausmaß, in dem das Verfahren oder die Methode nicht auf die bestimmte Abfolge von Arbeitsschritten wie hierin festgelegt angewiesen ist, nicht auf die beschriebene exakte Abfolge von Arbeitsschritten beschränkt sein. Wie von durchschnittlich bewanderten Fachleuten ohne weiteres erkennbar, sind auch andere Schrittabfolgen möglich. Aus diesem Grund darf die in dieser Spezifikation im speziellen vorgegebene Abfolge der Arbeitsschritte nicht als Einschränkung der Ansprüche interpretiert werden. Zudem dürfen die auf das Verfahren und/oder die Methode der vorliegenden Ausführungsbeispiele gerichteten Patentansprüche nicht auf die Durchführung ihrer Arbeitsschritte in der formulierten Reihenfolge eingeschränkt werden, und eine durchschnittlich bewanderte Fachperson erkennt ohne weiteres, dass die Abfolgen variiert werden können, ohne dass das Prinzip und der Geltungsbereich der vorliegenden Ausführungsbeispiele verlassen werden.

Die Ausführungsbeispiele schaffen Systeme und Verfahren zur Steigerung der Auflege-Rate eines automatisierten Auflegesystems. Die Ausführungsbeispiele können insbesondere auf die Verfahren und Systeme angewendet werden, die in der US-Patentanmeldung Nr. 13/557,621, eingereicht am 25. Juli 2012, offenbart sind.

**Bezugszeichenliste:**

| | | | |
|---|---|---|---|
| 1; 1' | Auflege-Maschine | 25 | Führungsbahnen |
| 2, 2' | Material-Zuführungseinheit | 26 | Führungsbahnen |
| 3, 3' | Material-Zuführungseinheit | 27 | Position |
| 4 | Linearantrieb | 28 | Position |
| 5 | Linearantrieb | 29 | Auflegekopfeinheit |
| 6; 6' | Schneideinrichtung | 30 | Auflegekopfeinheit |
| 7; 7' | Schneideinrichtung | 31 | Bandgreifanordnung |
| 8, 8' | Greifmechanismus | 32 | Linearantrieb |
| 9, 9' | Greifmechanismus | | |
| 10; 10' | Führungsbahnen | | |
| 11; 11' | Bewegungstisch | | |
| 12; 12' | Bandhefteinheit | | |
| 13 | | | |
| 14 | Bewegungstisch | | |
| 15 | Bandhefteinheit | | |
| 16 | Bandhefteinheit | | |
| 17 | Material-Zuführungseinheit | | |
| 18 | Material-Zuführungseinheit | | |
| 19 | Schneideinrichtung | | |
| 20 | Schneideinrichtung | | |
| 21 | Greifmechanismus | | |
| 22 | Greifmechanismus | | |
| 23 | Linearantrieb | | |
| 24 | Linearantrieb | | |

## Patentansprüche

1. Verfahren zum Auflegen und Anheften von Bandabschnitten auf ein herzustellendes Teil, aufweisend:
Zuführen von Bandmaterial mit einer ersten Material-Zuführungseinheit (2; 17; 2') über eine bestimmte Distanz über eine erste Schneideinrichtung (6; 19; 6') hinaus;
Greifen der Vorderkante des Bandmaterial von der ersten Material-Zuführungseinheit (2; 17; 2') mit einem ersten Greifmittel;
Bewegen des ersten Greifmittels über eine Distanz, die der gewünschten Länge des Bandabschnitts entspricht, in einer Richtung weg von der ersten Schneideinrichtung (6; 19; 6');
Abtrennen des Endes des Bandabschnitts von der ersten Material-Zuführungseinheit (2; 17; 2') mit der ersten Schneideinrichtung (6; 19; 6');
Bewegen des ersten Greifmittels weiter in Richtung weg von der ersten Schneideinrichtung (6; 19; 6'), bis der Bandabschnitt an einer gewünschten Stelle in Führungsbahnen (10; 25; 10') positioniert ist;
erstes Bewegen eines Bewegungstischs (11; 14; 11') in eine Position zur Aufnahme des Bandabschnitts;
Platzieren des von der ersten Material-Zuführungseinheit (2; 17; 2') bereitgestellten Bandabschnitts auf einer Bearbeitungsfläche des Bewegungstischs (11; 14; 11') und Anheften durch eine erste Bandhefteinheit (12; 15; 12'); und
Bewegen des ersten Greifmittels zurück in eine Position angrenzend an die erste Schneideinrichtung (6; 19; 6');
**dadurch gekennzeichnet, dass** das Verfahren weiter aufweist:
Zuführen von Bandmaterial mit einer zweiten Material-Zuführungseinheit (3; 18; 3') über eine bestimmte Distanz über eine zweite Schneideinrichtung (7; 20; 7') hinaus;
Greifen der Vorderkante eines Bandmaterials von der zweiten Material-Zuführungseinheit (3; 18; 3') mit einem zweiten Greifmittel;
Bewegen des zweiten Greifmittels über eine Distanz, die der gewünschten Länge des Bandabschnitts entspricht, in einer Richtung weg von der zweiten Schneideinrichtung (7; 20; 7');
Abtrennen des Endes des Bandabschnitts von der zweiten Material-Zuführungseinheit (3; 18; 3') mit einer zweiten Schneideinrichtung (7; 20; 7'); Bewegen des zweiten Greifmittels weiter in Richtung weg von der zweiten Schneideinrichtung (7; 20 7'), bis der Bandabschnitt an einer gewünschten Stelle in Führungsbahnen (10; 26; 10') positioniert ist;
zweites Bewegen des Bewegungstischs (11; 14; 11') in eine Position zur Aufnahme des Bandabschnitts;
Platzieren des von der zweiten Material-Zuführungseinheit (3; 18; 3') bereitgestellten Bandabschnitts auf der Bearbeitungsfläche des Bewegungstischs (11; 14; 11') und Anheften durch die erste Bandhefteinheit (12; 15; 12') oder durch eine zweite Bandhefteinheit (12; 16; 12'); und Bewegen des zweiten Greifmittels zurück in eine Position angrenzend an die zweite Schneideinrichtung (7; 20; 7').

2. Verfahren nach Anspruch **1,dadurch gekennzeichnet, dass** das erste Bewegen des Bewegungstischs (11; 11') in eine Position zur Aufnahme des Bandabschnitts gleichzeitig mit der Positionierung des von der ersten Material-Zuführungseinheit (2; 2') zugeführten Bandabschnitts in den Führungsbahnen (10; 10') erfolgt, und dass
das zweite Bewegen des Bewegungstischs (11; 11') in eine Position zur Aufnahme des Bandabschnitts gleichzeitig mit der Positionierung des von der zweiten Material-Zuführungseinheit (3; 3') zugeführten Bandabschnitts in den Führungsbahnen (10; 10') erfolgt.

3. Verfahren nach Anspruch 2, **dadurch gekennzeichnet, dass** das erste Greifmittel gebildet ist durch einen ersten Greifmechanismus (8), der an einem ersten Linearantrieb (4) montiert ist, und
das zweite Greifmittel gebildet ist durch einen zweiten Greifmechanismus (9), der an einem zweiten Linearantrieb (5) montiert ist; und dass weiter das Zuführen von Bandmaterial mit der zweiten Material-Zuführungseinheit (3) über eine bestimmte Distanz über die zweite Schneideinrichtung (7) hinaus gleichzeitig mit der Positionierung des von der ersten Material-Zuführungseinheit (2) zugeführten Bandabschnitts in den Führungsbahnen (10) erfolgt, und
das Zuführen von Bandmaterial mit der ersten Material-Zuführungseinheit (2) über eine bestimmte Distanz über die erste Schneideinrichtung (6) hinaus gleichzeitig mit der Positionierung des von der zweiten Material-Zuführungseinheit (3) zugeführten Bandabschnitts in den Führungsbahnen (10) erfolgt.

4. Verfahren nach Anspruch 2, **dadurch gekennzeichnet, dass** das erste und das zweite Greifmittel gebildet sind durch einen ersten Greifmechanismus (8') beziehungsweise einen zweiten Greifmechanismus (9') einer Bandgreifanordnung (31), die an einem Linearantrieb (32) montiert sind, wobei
der Linearantrieb (32) eine Bewegungsreichweite aufweist, die es dem ersten Greifmechanismus (8') erlaubt, auf Material zuzugreifen, das von der ersten Material-Zuführungseinheit (2') bereitgestellt wird, und die es dem zweiten Greifmechanismus (9') erlaubt, auf Material zuzugreifen, das von der zweiten Material-Zuführungseinheit (3') bereitgestellt wird; und dass weiter nach dem Platzieren des von der ersten Material-Zuführungseinheit (2') bereitgestellten Bandabschnitts auf einer Bearbeitungsfläche des Bewegungstischs (11') und Anheften durch die erste Bandhefteinheit (12') das Zuführen von Bandmaterial mit der zweiten Material-Zuführungseinheit (3') über eine bestimmte Distanz über die zweite Schneideinrichtung (7') hinaus erfolgt und der Linearantrieb (32) die Bandgreifanordnung (31) über die restliche Distanz bewegt, um diese in Position für den Zugriff auf Bandmaterial zu platzieren, das von der zweiten Material-Zuführungseinheit (3') bereitgestellt wurde, und
nach dem Platzieren des von der zweiten Material-Zuführungseinheit (3') bereitgestellten Bandabschnitts auf der Bearbeitungsfläche und Anheften durch die erste Bandhefteinheit (12') das Zuführen von Bandmaterial mit der ersten Material-Zuführungseinheit (2') über eine bestimmte Distanz über die erste Schneideinrichtung (6') hinaus erfolgt und der Linearantrieb (32) die Bandgreifanordnung (31) über die restliche Distanz bewegt, um diese in Position für den Zugriff auf Bandmaterial zu platzieren, das von der ersten Material-Zuführungseinheit (2') bereitgestellt wurde.

5. Verfahren nach Anspruch 1, **dadurch gekennzeichnet, dass** die ersten Greifmittel gebildet sind durch einen ersten Greifmechanismus (21), der an einem ersten Linearantrieb (23) montiert ist;
die zweiten Greifmittel gebildet sind durch einen zweiten Greifmechanismus (22), der an einem zweiten Linearantrieb (24) montiert ist;
die erste Material-Zuführungseinheit (17), der erste Greifmechanismus (21), der erste Linearantrieb (23), die erste Schneideinrichtung (19), Führungsbahnen (25) und eine erste Bandhefteinheit (15) aufgewiesen sind in einer ersten Auflegekopfeinheit (29);
die zweite Material-Zuführungseinheit (18), der zweite Greifmechanismus (22), der zweite Linearantrieb (24), die zweite Schneideinrichtung (20), Führungsbahnen (26) und eine zweite Bandhefteinheit (16) aufgewiesen sind in einer zweiten Auflegekopfeinheit (30);
die erste Auflegekopfeinheit (29) und die zweite Auflegekopfeinheit (30) eingerichtet sind, sich beim Ziehen, Platzieren und Anheften von Bandabschnitten auf der Bearbeitungsfläche des Bewegungstisches (14) abzuwechseln; und dass weiter
gleichzeitig mit der Positionierung des von der ersten Material-Zuführungseinheit (17) zugeführten Bandabschnitts in den Führungsbahnen (25)
das erste Bewegen des Bewegungstischs (14) in eine Position zur Aufnahme des Bandabschnitts zu einer Position (27) unterhalb der ersten Auflegekopfeinheit (29),
das Zuführen von Bandmaterial mit der zweiten Material-Zuführungseinheit (18) über eine bestimmte Distanz über die zweite Schneideinrichtung (20) hinaus, und
das Greifen der Vorderkante des Bandmaterials von der zweiten Material-Zuführungseinheit (18) mit dem zweiten Greifmechanismus (22) erfolgt;
während des Anheftens des von der ersten Material-Zuführungseinheit (17) bereitgestellten Bandabschnitts durch die erste Bandhefteinheit (15) das Greifen der Vorderkante des Bandmaterials von der zweiten Material-Zuführungseinheit (18) mit dem zweiten Greifmechanismus (22),
das Bewegen des zweiten Greifmechanismus(22) über die Distanz, die der gewünschten Länge des Bandabschnitts entspricht, in der Richtung weg von der zweiten Schneideinrichtung (20), und das Abtrennen des Endes des Bandabschnitts von der Material-Zuführungseinheit (18) mit einer zweiten Schneideinrichtung (20) erfolgt; und
während des Anheftens des von der zweiten Material-Zuführungseinheit (18) bereitgestellten Bandabschnitts durch die zweite Bandhefteinheit (16) das Bewegen des ersten Greifmechanismus (22) über die Distanz, die der gewünschten Länge des Bandabschnitts entspricht, in der Richtung weg von der ersten Schneideinrichtung (19), und das Abtrennen des Endes des Bandabschnitts von der ersten Material-Zuführungseinheit (17) mit der ersten Schneideinrichtung (19) erfolgt.

6. Verfahren nach Anspruch 5, **dadurch gekennzeichnet, dass** weiter nach dem Anheften des von der ersten Material-Zuführungseinheit (17) bereitgestellten Bandabschnitts durch die erste Bandhefteinheit (15)
sich die erste Bandhefteinheit (15) zurückzieht, während das Bewegen des ersten Greifmechanismus (21) zurück in eine Position angrenzend an die erste Schneideinrichtung (19) erfolgt, und
der Bewegungstisch (14) an die Position (28) unterhalb der zweiten Auflegekopfeinheit (30) zurückkehrt;
während sich der Bewegungstisch (14) zur Position (28) unterhalb der zweiten Auflegekopfeinheit (30) bewegt, das Bewegen des Greifmechanismus (22) weiter in Richtung weg von der ersten Schneideinrichtung (20), bis der Bandabschnitt an der gewünschten Stelle in den Führungsbahnen (26) positioniert ist, erfolgt;
nach dem Anheften des von der zweiten Material-Zuführungseinheit (18) bereitgestellten Bandabschnitts durch die zweite Bandhefteinheit (16)
sich die zweite Bandhefteinheit (16) zurückzieht, während das Bewegen des zweiten Greifmechanismus (22) zurück in eine Position angrenzend an die zweite Schneideinrichtung (20) erfolgt, und
der Bewegungstisch (14) an die Position (27) unterhalb der ersten Auflegekopfeinheit (29) zurückkehrt; und
während sich der Bewegungstisch (14) zur Position (27) unterhalb der ersten Auflegekopfeinheit (29) bewegt, das Bewegen des ersten Greifmechanismus (21) weiter in Richtung weg von der ersten Schneideinrichtung (19), bis der Bandabschnitt an der gewünschten Stelle in den Führungsbahnen (25) positioniert ist, erfolgt.

7. Verfahren nach einem der Ansprüche 1 bis 6, **dadurch gekennzeichnet, dass** das erste Greifmittel und das zweite Greifmittel abwechselnd die von der ersten Material-Zuführungseinheit (2; 17; 2') beziehungsweise von der zweiten Material-Zuführungseinheit (3; 18; 3') bereitgestellten Bandabschnitte ziehen.

8. Verfahren nach einem der Ansprüche 1 bis 6, **dadurch gekennzeichnet, dass** das Verfahren weiter aufweist ein Festlegen, durch einen Algorithmus, welches von dem ersten und dem zweiten Greifmittel sich in einer Position befindet, den nächsten Bandabschnitt in der kürzesten Zeit zu ziehen und zu platzierten.

9. Auflege-Maschine (1; 1') zum Auflegen und Anheften von Bandabschnitten auf ein herzustellendes Teil, aufweisend:
eine ersten Material-Zuführungseinheit (2; 17; 2') zum Zuführen von Bandmaterial;
erste Greifmittel zum Ziehen von Bandmaterial von der ersten Material-Zuführungseinheit (2; 17; 2') und zum Positionieren des Bandmaterials in Führungsbahnen (10; 25; 10');
eine erste Schneideinrichtung (6; 19; 6') zum Schneiden auf Länge des Bandabschnitts von der ersten Material-Zuführungseinheit (2; 17; 2');
einen Bewegungstisch (11; 14; 11'); und
zumindest eine Bandhefteinheit (12; 15; 12') zum Platzieren auf einer Bearbeitungsfläche des Bewegungstisches und zum Anheften der Bandabschnitte;
**dadurch gekennzeichnet, dass** die Auflege-Maschine (1; 1') weiter aufweist
eine zweite Material-Zuführungseinheit (3; 18; 3') zum Zuführen von Bandmaterial;
zweite Greifmittel zum Ziehen von Bandmaterial von der zweiten Material-Zuführungseinheit (3; 18; 3') und zum Positionieren des Bandmaterials in Führungsbahnen (10; 25; 10'); und
eine zweite Schneideinrichtung (7; 20; 7') zum Schneiden auf Länge des Bandabschnitts von der zweiten Material-Zuführungseinheit (3; 18; 3').

10. Auflege-Maschine (1; 1') nach Anspruch 9, **dadurch gekennzeichnet, dass** die ersten Greifmittel gebildet sind durch einen ersten Greifmechanismus (8; 21), der an einem ersten Linearantrieb (4; 23) montiert ist, und die zweiten Greifmittel gebildet sind durch einen zweiten Greifmechanismus (9; 22), der an einem zweiten Linearantrieb (5; 24) montiert ist.

11. Auflege-Maschine (1; 1') nach einem der Ansprüche 9 bis 10, **dadurch gekennzeichnet, dass** die erste Material-Zuführungseinheit (2; 2') auf einer Seite einer Hauptstruktur der Auflege-Maschine (1; 1') montiert ist, und die zweite Material-Zuführungseinheit (3; 3'), die auf der gegenüberliegenden Seite montiert ist.

12. Auflege-Maschine (1; 1') nach einem der Anspruch 9 bis 11, **dadurch g ekennzeichnet**, dass die Material-Zuführungseinheiten, Schneideinrichtungen und Führungsbahnen in einer von der Bandhefteinheit versetzten Position angeordnet sind,
und wobei ein Mechanismus vorgesehen ist, um die Führungsbahnen, welche den nächsten Bandabschnitt halten, in eine Position unterhalb der Bandhefteinheit drehen oder versetzen.

13. Auflege-Maschine (1; 1') nach einem der Ansprüche 10 bis 12, wobei die erste Material-Zuführungseinheit (17), der erste Greifmechanismus (21), der erste Linearantrieb (23), die erste Schneideinrichtung (19), Führungsbahnen (25) und eine erste Bandhefteinheit (15) aufgewiesen sind in einer ersten Auflegekopfeinheit (29), und
die zweite Material-Zuführungseinheit (18), der zweite Greifmechanismus (22), der zweite Linearantrieb (24), die zweite Schneideinrichtung (20), Führungsbahnen (25) für das Material und eine zweite Bandhefteinheit (16) aufgewiesen sind in einer zweiten Auflegekopfeinheit (30), und wobei die erste Auflegekopfeinheit (29) und die zweite Auflegekopfeinheit (30) eingerichtet sind, sich beim Ziehen, Platzieren und Anheften von Bandabschnitten auf der Bearbeitungsfläche des Bewegungstisches (14) abwechseln.

14. Auflege-Maschine (1; 1') nach Anspruch 9, **dadurch gekennzeichnet, dass** die ersten und die zweiten Greifmittel gebildet sind durch einen ersten Greifmechanismus (8') und einen zweiten Greifmechanismus (9') einer Bandgreifanordnung (31), die an einem Linearantrieb (32) montiert ist, wobei der Linearantrieb (32) eine Bewegungsreichweite aufweist, die es dem ersten Greifmechanismus (8') erlaubt, auf Material zuzugreifen, das von der ersten Material-Zuführungseinheit (2') bereitgestellt wird, und die es dem zweiten Greifmechanismus (9') erlaubt, auf Material zuzugreifen, das von der zweiten Material-Zuführungseinheit (3') bereitgestellt wird.

15. Auflege-Maschine (1; 1') nach einem der Ansprüche 9 bis 14, **dadurch gekennzeichnet, dass** die Auflege-Maschine (1; 1') eingerichtet ist, das Verfahren nach einem der Ansprüche 1 bis 8 auszuführen.

## Claims

1. A method for placing and attaching strip sections to a part to be produced, comprising:
feeding of strip material by means of a first material feed unit (2; 17; 2') over a specific distance beyond a first cutting device (6; 19; 6');
gripping of the front edge of the strip material by the first material feed unit (2; 17; 2') with a first gripping means;
moving the first gripping means over a distance which corresponds to the desired length of the strip section, in a direction away from the first cutting device (6; 19; 6');
severing the end of the strip section from the first material feed unit (2; 17; 2') with the first cutting device (6; 19; 6');
moving the first gripping means further in the direction away from the first cutting device (6; 19; 6') until the strip section is positioned at a desired position in guideways (10; 25; 10'); first moving of a movement table (11; 14; 11') to a position for accommodating the strip section;
placing the strip section provided by the first material feed unit (2; 17; 2') on a processing surface of the movement table (11; 14; 11') and attachment by a first strip attachment unit (12; 15; 12'); and
moving the first gripping means back to a position adjoining the first cutting device (6; 19; 6');
**characterized in that** the method further comprises:
feeding of strip material by a second material feed unit (3; 18; 3') over a specific distance beyond a second cutting device (7; 20; 7');
gripping of the front edge of a strip material by the second material feed unit (3; 18; 3') with a second gripping means;
moving the second gripping means over a distance which corresponds to the desired length of the strip section, in a direction away from the second cutting device (7; 20; 7');
severing the end of the strip section from the second material feed unit (3; 18; 3') by means of a second cutting device (7; 20; 7');
moving the second gripping means further in the direction away from the second cutting device (7; 20; 7') until the strip section is positioned at a desired position in guideways (10; 26; 10');
second moving of the movement table (11; 14; 11') to a position for receiving the strip section;
placing the strip section provided by the second material feed unit (3; 18; 3') on the processing surface of the movement table (11; 14; 11') and attachment by the first strip attachment unit (12; 15; 12') or by a second strip attachment unit (12; 16; 12');
and moving the second gripping means back to a position adjoining the second cutting device (7; 20; 7').

2. A method according to claim 1, **characterized in that** the first movement of the movement table (11; 11') to a position for receiving the strip section occurs simultaneously with the positioning of the strip section supplied by the first material feed unit (2; 2') in the guideways (10; 10'), and that the second movement of the movement table (11; 11') to a position for receiving the strip section occurs simultaneously with the positioning of the strip section supplied by the second material feed unit (3; 3') in the guideways (10; 10').

3. A method according to claim 2, **characterized in that** the first gripping means is formed by a first gripping mechanism (8) which is mounted on a first linear drive (4), and the second gripping means is formed by a second gripping mechanism (9) which is mounted on a second linear drive (5), and further the feeding of strip material with the second material feed unit (3) occurs over a specific distance beyond the second cutting device (7) simultaneously with the positioning of the strip section supplied by the first material feed unit (2) in the guideways (10), and
the feeding of strip material with the first material feed unit (2) occurs over a specific distance beyond the first cutting device (6) simultaneously with the positioning of the strip section supplied by the second material feed unit (3) in the guideways (10).

4. A method according to claim 2, **characterized in that** the first and the second gripping means are formed by a first gripping mechanism (8') and a second gripping mechanism (9') of a strip gripping arrangement (31), which are mounted on a linear drive (32), wherein the linear drive (32) has a movement range which allows the first gripping mechanism (8') to access material which is provided by the first material feed unit (2'), and which allows the second gripping mechanism (9') to access material which is provided by the second material feed unit (3'), and that further, after the placement of the strip section provided by the first material feed unit (2') on a processing surface of the movement table (11') and attachment by the first attachment unit (12'), the feeding of strip material with the second material feed unit (3') occurs over a specific distance beyond the second cutting device (7'), and the linear drive (32) moves the strip gripping arrangement (31) over the remaining distance in order to position said arrangement for access to the strip material which was provided by the second material feed unit (3'), and,
after the placement of the strip section provided by the second material feed unit (3') on the processing surface and attachment by the first attachment unit (12'), the feeding of strip material with the first material feed unit (2') occurs over a specific distance beyond the first cutting device (6'), and the linear drive (32) moves the strip gripping arrangement (31) over the remaining distance in order to position said arrangement for access to the strip material which was provided by the first material feed unit (2').

5. A method according to claim 1, **characterized in that** the first gripping means are formed by a first gripping mechanism (21) which is mounted on a first linear drive;
the second gripping means are formed by a second gripping mechanism (22) which is mounted on a second linear drive (24); the first material feed unit (17), the first gripping mechanism (21), the first linear drive (23), the first cutting device (19), guideways (25) and a first strip attachment unit (15) are provided in a first placement head unit (29); the second material feed unit (18), the second gripping mechanism (22), the second linear drive (24), the second cutting device (20), guideways (26) and a second attachment unit (16) are provided in a second placement head unit (30);
the first placement head unit (29) and the second placement head unit (30) are designed to alternate during the drawing, the placement and the attachment of strip sections on the processing surface of the movement table (14); and that further simultaneously with the positioning of the strip section supplied by the first material feed unit (17) in the guideways the first movement of the movement table (14) occurs in a position for receiving the strip section to a position (27) beneath the first placement head unit (29),
the feeding of strip material with the second material feed unit (18) occurs over a specific distance beyond the second cutting device (20), and the gripping of the front edge of the strip material from the second material feed unit (18) occurs by the second gripping mechanism (22);
during the attachment of the strip section, which is provided by the first material feed unit (17), by the first trip attachment unit (15) the gripping of the front edge of the strip material from the second material feed unit (18) occurs with the second gripping mechanism (22), the movement of the second gripping mechanism (22) occurs over the distance which corresponds to the desired length of the strip section in the direction away from the second cutting device (20), and the severing of the end of the strip section from the material feed unit (18) occurs by a second cutting device (20);
and during the attachment of the strip section, which is provided by the second material feed unit (18), by the second strip attachment unit (16) the movement of the first gripping mechanism (22) occurs over the distance which corresponds to the desired length of the strip section in the direction away from the first cutting device (19), and the severing of the end of the strip section from the material feed unit (17) occurs by the first cutting device (19).

6. A method according to claim 5, **characterized in that** further after the attachment of the strip section, which is provided by the first material feed unit (17), by the first strip attachment unit strip (15) the first strip attachment unit (15) retracts, while the movement of the first gripping mechanism (21) occurs back to a position adjoining the first cutting device (19), and the movement table (14) returns to the position (28) beneath the second placement head unit (30);
while the movement table (14) moves to the position (28) beneath the second placement head unit (30), the movement of the gripping mechanism (22) occurs further in the direction away from the first cutting device (20) until the strip section is positioned at that the desired position in the guideways (26);
after the attachment of the strip section, which is provided by the second material feed unit (18), by the second strip attachment unit (16) the second strip attachment unit (16) retracts, while the movement of the second gripping mechanism (22) occurs back to a position adjoining the second cutting device (20), and the movement table (14) returns to the position (27) beneath the first placement head unit (29); and while the movement table (14) moves to the position (27) beneath the first placement head unit (29), the movement of the first gripping mechanism (21) occurs further in the direction away from the first cutting device (19) until the strip section is positioned at the desired position in the guideways (25).

7. A method according to one of the claims 1 to 6, **characterized in that** the first gripping means and the second gripping means alternatingly draw the strip sections supplied by the first material feed unit (2; 17; 2') or the second material feed unit (3; 18; 3').

8. A method according to one of the claims 1 to 6, **characterized in that** the method further comprises a determination by an algorithm which of the first and second gripping means is in a position to draw and place the next strip section in the shortest possible time.

9. A placement machine (1; 1') for placing and attaching strip sections on the part to be produced, comprising:
a first material feed unit (2; 17; 2') for feeding strip material;
a first gripping means for drawing strip material from the first material feed unit (2; 17; 2') and for positioning the strip material in guideways (10; 25; 10');
a first cutting device (6; 19; 6') for cutting to length the strip section from the first material feed unit (2; 17; 2'); a movement table (11; 14; 11');
and at least one strip attachment unit (12; 15; 12') for placement on a processing surface of the movement table and for attaching the strip sections;
**characterized in that** the placement machine (1; 1') further comprises a second material feed unit (3; 18; 3') for feeding strip material;
second gripping means for drawing strip material from the second material feed unit (3; 18; 3') and for positioning the strip material in guideways (10; 25; 10'); and a second cutting device (7; 20; 7') for cutting to length the strip section from the second material feed unit (3; 18; 3').

10. A placement machine (1; 1') according to claim 9, **characterized in that** the first gripping means are formed by a first gripping mechanism (8; 21) which is mounted on a first linear drive (4; 23), and the second gripping means are formed by a second gripping mechanism (9; 22) which is mounted on a second linear drive (5; 24).

11. A placement machine (1; 1') according to one of the claims 9 to 10, **characterized in that** the first material feed unit (2; 2') is mounted on one side of a main structure of the placement machine (1; 1'), and the second material feed unit (3; 3') is mounted on the opposite side.

12. A placement machine (1; 1') according to one of the claims 9 to 11, **characterized in that** the material feed units, cutting devices and guideways are arranged in a position offset from the strip attachment unit, and wherein a mechanism is provided to twist or offset the guideways, which hold the next strip section, to a position beneath the strip attachment unit.

13. A placement machine (1; 1') according to one of the claims 10 to 12, wherein the first material feed unit (17), the first gripping mechanism (21), the first linear drive (23), the first cutting device (19), guideways (25) and a first strip attachment unit (15) are provided in a first placement head unit (29), and the second material feed unit (18), the second gripping mechanism (22), the second linear drive (24), the second cutting device (20), guideways (25) for the material and a second strip attachment unit (60) are provided in a second placement head unit (32),
and wherein the first placement head unit (29) and the second placement head unit (30) are designed to alternate during the drawing, placement and attachment of strip sections on the processing surface of the movement table (14).

14. A placement machine (1; 1') according to claim 9, **characterized in that** the first and second gripping means are formed by a first gripping mechanism (8') and a second gripping mechanism (9') of a strip gripping arrangement (31), which is mounted on a linear drive (32), wherein the linear drive (32) has a movement range which allows the first gripping mechanism (8') to grip material which is provided by the first material feed unit (2'), and which allows the second gripping mechanism (9') to grip material which is provided by the second material feed unit (3').

15. A placement machine (1; 1') according to one of the claims 9 to 14, **characterized in that** the placement machine (1; 1') is designed to carry out the method according to one of the claims 1 to 8.

## Revendications

1. Procédé pour poser et agrafer des morceaux de bande sur une pièce à fabriquer, comprenant:
l'acheminement de matériau en bande par une première unité d'arrivée de matériau (2 ; 17 ; 2') sur une certaine distance au-delà d'un premier dispositif de coupe (6 ; 19 ; 6') ;
la préhension du bord avant du matériau en bande provenant de la première unité d'arrivée de matériau (2 ; 17 ; 2') avec un premier moyen de préhension ;
le déplacement du premier moyen de préhension sur une distance correspondant à la longueur souhaitée du morceau de bande dans une direction qui l'éloigne du premier dispositif de coupe (6 ; 19 ; 6') ;
la découpe de l'extrémité du morceau de bande provenant de la première unité d'arrivée de matériau (2 ; 17 ; 2') avec le premier dispositif de coupe (6 ; 19 ; 6') ;
le nouveau déplacement du premier moyen de préhension pour l'éloigner du premier dispositif de coupe (6 ; 19 ; 6') jusqu'à ce que le morceau de bande soit positionné à un endroit souhaité dans des pistes de guidage (10 ; 25 ; 10') ;
le premier déplacement d'un plateau de déplacement (11 ; 14 ; 11') dans une position permettant de recevoir le morceau de bande ;
le placement du morceau de bande fourni par la première unité d'arrivée de matériau (2 ; 17 ; 2') sur une surface de traitement du plateau de déplacement (11 ; 14 ; 11') et son agrafage par une première unité d'agrafage de bande (12 ; 15 ; 12') ;
et le déplacement du premier moyen de préhension pour le ramener dans une position limitrophe du premier dispositif de coupe (6 ; 19 ; 6') ;
**caractérisé en ce qu'**il comprend en outre :
l'acheminement de matériau en bande avec une deuxième unité d'arrivée de matériau (3 ; 18 ; 3') sur une certaine distance au-delà d'un deuxième dispositif de coupe (7 ; 20 ; 7') ;
la préhension du bord avant d'un matériau en bande provenant de la deuxième unité d'arrivée de matériau (3 ; 18 ; 3') avec un deuxième moyen de préhension ;
le déplacement du deuxième moyen de préhension sur une distance correspondant à la longueur souhaitée du morceau de bande, dans une direction qui l'éloigne du deuxième dispositif de coupe (7 ; 20 ; 7');
la découpe de l'extrémité du morceau de bande provenant de la deuxième unité d'arrivée de matériau (3 ; 18 ; 3') avec un deuxième dispositif de coupe (7 ; 20 ; 7') ;
le nouveau déplacement du deuxième moyen de préhension dans une direction qui l'éloigne du deuxième dispositif de coupe (7 ; 20 7'), jusqu'à ce que le morceau de bande soit positionné à un endroit souhaité dans des pistes de guidage (10 ; 26 ; 10') ;
le deuxième déplacement du plateau de déplacement (11 ; 14 ; 11') dans une position permettant de recevoir le morceau de bande ;
le placement du morceau de bande fourni par la deuxième unité d'arrivée de matériau (3 ; 18 ; 3') sur la surface de traitement du plateau de déplacement (11 ; 14 ; 11') et son agrafage par la première unité d'agrafage de bande (12 ; 15 ; 12') ou par une deuxième unité d'agrafage de bande (12 ; 16 ; 12') ;
et le déplacement du deuxième moyen de préhension pour le ramener dans une position limitrophe du deuxième dispositif de coupe (7 ; 20 ; 7').

2. Procédé selon la revendication 1, **caractérisé en ce que** le premier déplacement du plateau de déplacement (11 ; 11') dans une position permettant de recevoir le morceau de bande a lieu en même temps que le positionnement du morceau de bande fourni par la première unité d'arrivée de matériau (2 ; 2') dans les pistes de guidage (10 ; 10') et **en ce que** le deuxième déplacement des plateau de déplacement (11 ; 11') dans une position permettant de recevoir le morceau de bande a lieu en même temps que le positionnement du morceau de bande fourni par la deuxième unité d'arrivée de matériau (3 ; 3') dans les pistes de guidage (10 ; 10').

3. Procédé selon la revendication 2, **caractérisé en ce que** le premier moyen de préhension est formé d'un premier mécanisme de préhension (8) qui est monté sur un premier entraînement linéaire (4),
et le deuxième moyen de préhension est formé par un deuxième mécanisme de préhension (9) qui est monté sur un deuxième entraînement linéaire (5),
et **en ce que** l'acheminement de matériau en bande par la deuxième unité d'arrivée de matériau (3) sur une certaine distance au-delà du deuxième dispositif de coupe (7) a lieu en même temps que le positionnement du morceau de bande fourni par la première unité d'arrivée de matériau (2) dans les pistes de guidage (10), et l'acheminement de matériau en bande par la première unité d'arrivée de matériau (2) sur une certaine distance au-delà du premier dispositif de coupe (6) a lieu en même temps que le positionnement du morceau de bande fourni par la deuxième unité d'arrivée de matériau (3) dans les pistes de guidage (10).

4. Procédé selon la revendication 2, **caractérisé en ce que** les premier et deuxième moyens de préhension sont formés par un premier mécanisme de préhension (8') et un deuxième mécanisme de préhension (9') d'un dispositif de préhension de bande (31) qui est monté sur un entraînement linéaire (32),
l'entraînement linéaire (32) présentant une portée de déplacement qui permet au premier mécanisme de préhension (8') d'accéder à du matériau fourni par la première unité d'arrivée de matériau (2') et qui permet au deuxième mécanisme de préhension (9') d'accéder à du matériau fourni par la deuxième unité d'arrivée de matériau (3'), et **en ce que** après le placement du morceau de bande fourni par la première unité d'arrivée de matériau (2') sur une surface de traitement du plateau de déplacement (11') et son agrafage par la première unité d'agrafage de bande (12'), le matériau en bande est acheminé par la deuxième unité d'arrivée de matériau (3') sur une certaine distance au-delà du deuxième dispositif de coupe (7') et l'entraînement linéaire (32) déplace le dispositif de préhension de bande (31) sur le reste de la distance afin de le placer en position pour accéder au matériau en bande qui a été fourni par la deuxième unité d'arrivée de matériau (3'), et après le placement du morceau de bande fourni par la deuxième unité d'arrivée de matériau (3') sur la surface de traitement et son agrafage par la première unité d'agrafage de bande (12'), le matériau en bande est acheminé par la première unité d'arrivée de matériau (2') sur une certaine distance au-delà du premier dispositif de coupe (6') et l'entraînement linéaire (32) déplace le dispositif de préhension de bande (31) sur la distance restante afin de le placer en position pour accéder au matériau en bande qui a été fourni par la première unité d'arrivée de matériau (2').

5. Procédé selon la revendication 1, **caractérisé en ce que** les premiers moyens de préhension sont formés par un premier mécanisme de préhension (21) qui est monté sur un premier entraînement linéaire (23) ;
les deuxièmes moyens de préhension sont formés par un deuxième mécanisme de préhension (22) qui est monté sur un deuxième entraînement linéaire (24) ;
la première unité d'arrivée de matériau (17), le premier mécanisme de préhension (21), le premier entraînement linéaire (23), le premier dispositif de coupe (19), les pistes de guidage (25) et une première unité d'agrafage de bande (15) sont inclus dans une première unité de tête de pose (29) ;
la deuxième unité d'arrivée de matériau (18), le deuxième mécanisme de préhension (22), le deuxième entraînement linéaire (24), le deuxième dispositif de coupe (20), les pistes de guidage (26) et une deuxième unité d'agrafage de bande (16) sont inclus dans une deuxième unité de tête de pose (30) ;
la première unité de tête de pose (29) et la deuxième unité de tête de pose (30) sont aménagées pour alterner lors de la traction, du placement et de l'agrafage de morceaux de bande sur la surface de traitement du plateau de déplacement (14) ; et **en ce que** en même temps que le positionnement du morceau de bande fourni par la première unité d'arrivée de matériau (17) dans les pistes de guidage (25),
le premier déplacement du plateau de déplacement (14) dans une position permettant de recevoir le morceau de bande se produit vers une position (27) située en dessous de la première unité de tête de pose (29),
le matériau en bande fourni par la deuxième unité d'arrivée de matériau (18) est acheminé sur une certaine distance au-delà du deuxième dispositif de coupe (20) et le bord antérieur du matériau en bande est saisi par la deuxième unité d'arrivée de matériau (18) avec le deuxième mécanisme de préhension (22) ;
pendant l'agrafage par la première unité d'agrafage de bande (15) du morceau de bande fourni par la première unité d'arrivée de matériau (17),
le bord antérieur du matériau en bande est saisi par la deuxième unité d'arrivée de matériau (18) avec le deuxième mécanisme de préhension (22),
le deuxième mécanisme de préhension (22) est déplacé sur la distance correspondant à la longueur souhaitée du morceau de bande dans la direction qui l'éloigne du deuxième dispositif de coupe (20),
et l'extrémité du morceau de bande provenant de l'unité d'arrivée de matériau (18) est découpée avec un deuxième dispositif de coupe (20) ; et pendant l'agrafage par la deuxième unité d'agrafage de bande (16) du morceau de bande fourni par la deuxième unité d'arrivée de matériau (18),
le premier mécanisme de préhension (22) est déplacé sur la distance correspondant à la longueur souhaitée du morceau de bande dans la direction qui l'éloigne du premier dispositif de coupe (19), et l'extrémité du morceau de bande provenant de la première unité d'arrivée de matériau (17) est découpée avec le premier dispositif de coupe (19).

6. Procédé selon la revendication 5, **caractérisé en outre en ce qu'**après l'agrafage par la première unité d'agrafage de bande (15) du morceau de bande fourni par la première unité d'arrivée de matériau (17),
la première unité d'agrafage de bande (15) se retire tandis que le premier mécanisme de préhension (21) se déplace pour revenir dans une position limitrophe du premier dispositif de coupe (19), et
le plateau de déplacement (14) revient à la position (28) située en dessous de la deuxième unité de tête de pose (30) ;
et tandis que le plateau de déplacement (14) se déplace vers la position (28) située en dessous de la deuxième unité de tête de pose (30), le mécanisme de préhension (22) continue de se déplacer dans une direction qui l'éloigne du premier dispositif de coupe (20) jusqu'à ce que le morceau de bande soit positionné à l'endroit souhaité dans les pistes de guidage (26) ;
après l'agrafage par la deuxième unité d'agrafage de bande (16) du morceau de bande fourni par la deuxième unité d'arrivée de matériau (18),
la deuxième unité d'agrafage de bande (16) se retire, tandis que le deuxième mécanisme de préhension (22) se déplace pour revenir dans une position limitrophe du deuxième dispositif de coupe (20), et le plateau de déplacement (14) revient à la position (27) située en dessous de la première unité de tête de pose (29) ;
et tandis que le plateau de déplacement (14) se déplace vers la position (27) située en dessous de la première unité de tête de pose (29), le premier mécanisme de préhension (21) continue de se déplacer dans une direction qui l'éloigne du premier dispositif de coupe (19) jusqu'à ce que le morceau de bande soit positionné à l'endroit souhaité dans les pistes de guidage (25).

7. Procédé selon l'une des revendications 1 à 6, **caractérisé en ce que** le premier moyen de préhension et le deuxième moyen de préhension tirent alternativement sur des morceaux de bande fournis par la première unité d'arrivée de matériau (2 ; 17 ; 2') et par la deuxième unité d'arrivée de matériau (3 ; 18 ; 3').

8. Procédé selon l'une des revendications 1 à 6, **caractérisé en ce qu'**il comporte en outre la détermination par un algorithme de celui des premier et deuxième moyens de préhension qui se trouve en position pour tirer et placer le morceau de bande suivant dans le temps le plus court.

9. Machine d'application (1 ; 1') pour l'application et l'agrafage de morceaux de bande sur une pièce à fabriquer, présentant :
une première unité d'arrivée de matériau (2 ; 17 ; 2') pour amener du matériau en bande ;
des premiers moyens de préhension pour tirer du matériau en bande provenant de la première unité d'arrivée de matériau (2 ; 17 ; 2') et pour positionner le matériau en bande dans des pistes de guidage (10 ; 25 ; 10') ;
un premier dispositif de coupe (6 ; 19 ; 6') pour recouper le morceau de bande provenant de la première unité d'arrivée de matériau (2 ; 17 ; 2') à la longueur voulue ;
un plateau de déplacement (11 ; 14 ; 11') ;
et au moins une unité d'agrafage de bande (12 ; 15 ; 12') pour placer les morceaux de bande sur une surface de traitement du plateau de déplacement et les agrafer ;
**caractérisée en ce que** la machine d'application (1 ; 1') comprend en outre une deuxième unité d'arrivée de matériau (3 ; 18 ; 3') pour amener du matériau en bande ;
des deuxièmes moyens de préhension pour tirer le matériau en bande provenant de la deuxième unité d'arrivée de matériau (3 ; 18 ; 3') et le positionner dans des pistes de guidage (10 ; 25 ; 10') ;
et un deuxième dispositif de coupe (7 ; 20 ; 7') pour recouper le morceau de bande provenant de la deuxième unité d'arrivée de matériau (3 ; 18 ; 3') à la longueur souhaitée.

10. Machine d'application (1 ; 1') selon la revendication 9, **caractérisée en ce que** les premiers moyens de préhension sont formés par un premier mécanisme de préhension (8 ; 21) qui est monté sur un premier entraînement linéaire (4 ; 23), et les deuxièmes moyens de préhension sont formés par un deuxième mécanisme de préhension (9 ; 22) qui est monté sur un deuxième entraînement linéaire (5 ; 24).

11. Machine d'application (1 ; 1') selon l'une des revendications 9 à 10, **caractérisée en ce que** la première unité d'arrivée de matériau (2 ; 2') est montée sur un côté d'une structure principale de la machine d'application (1 ; 1') et la deuxième unité d'arrivée de matériau (3 ; 3') est montée sur le côté opposé.

12. Machine d'application (1 ; 1') selon l'une des revendications 9 à 11, **caractérisée en ce que** les unités d'arrivée de matériau, les dispositifs de coupe et les pistes de guidage sont disposés dans une position décalée par rapport à l'unité d'agrafage de bande, un mécanisme étant prévu pour tourner ou décaler les pistes de guidage qui retiennent le morceau de bande suivant jusqu'à une position située en dessous de l'unité d'agrafage de bande.

13. Machine d'application (1 ; 1') selon l'une des revendications 10 à 12, dans laquelle la première unité d'arrivée de matériau (17), le premier mécanisme de préhension (21), le premier entraînement linéaire (23), le premier dispositif de coupe (19), les pistes de guidage (25) et une première unité d'agrafage de bande (15) sont inclus dans une première unité de tête de pose (29),
et la deuxième unité d'arrivée de matériau (18), le deuxième mécanisme de préhension (22), le deuxième entraînement linéaire (24), le deuxième dispositif de coupe (20), les pistes de guidage (25) pour le matériau et une deuxième unité d'agrafage de bande (16) sont inclus dans une deuxième unité de tête de pose (30),
la première unité de tête de pose (29) et la deuxième unité de tête de pose (30) étant équipées pour tirer, placer et agrafer alternativement des morceaux de bande sur la surface de traitement du plateau de déplacement (14).

14. Machine d'application (1 ; 1') selon la revendication 9, **caractérisée en ce que** les premiers et deuxièmes moyens de préhension sont formés par un premier mécanisme de préhension (8') et un deuxième mécanisme de préhension (9') d'un dispositif de préhension de bande (31) qui est monté sur un entraînement linéaire (32), lequel entraînement linéaire (32) présente une portée de déplacement qui permet au premier mécanisme de préhension (8') d'accéder au matériau fourni par la première unité d'arrivée de matériau (2') et qui permet au deuxième mécanisme de préhension (9') d'accéder au matériau fourni par la deuxième unité d'arrivée de matériau (3').

15. Machine d'application (1 ; 1') selon l'une des revendications 9 à 14, **caractérisée en ce que** la machine d'application (1 ; 1') est équipée pour exécuter le procédé selon l'une des revendications 1 à 8.
